(19) Europäisches Patentamt
European Patent Office
Office européen des brevets

(11) **EP 3 410 217 A1**

(12) **EUROPEAN PATENT APPLICATION**

(43) Date of publication:
**05.12.2018 Bulletin 2018/49**

(51) Int Cl.:
***G03G 9/125*** *(2006.01)* ***G03G 9/13*** *(2006.01)*

(21) Application number: **18174497.0**

(22) Date of filing: **28.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.05.2017 JP 2017107401**
**30.01.2018 JP 2018013919**

(71) Applicant: **CANON KABUSHIKI KAISHA**
**Ohta-ku**
**Tokyo 146-8501 (JP)**

(72) Inventors:
- **TSUCHIDA, Naohiko**
  **Tokyo, 146-8501 (JP)**
- **HIRASA, Takashi**
  **Tokyo, 146-8501 (JP)**
- **AKASHI, Yasutaka**
  **Tokyo, 146-8501 (JP)**
- **TOKUNAGA, Yuzo**
  **Tokyo, 146-8501 (JP)**
- **MATSUBARA, Akifumi**
  **Tokyo, 146-8501 (JP)**
- **NATORI, Ryo**
  **Tokyo, 146-8501 (JP)**
- **HASEGAWA, Waka**
  **Tokyo, 146-8501 (JP)**
- **MASHIDA, Ayano**
  **Tokyo, 146-8501 (JP)**
- **ITO, Junji**
  **Tokyo, 146-8501 (JP)**
- **AICHI, Yasuhiro**
  **Tokyo, 146-8501 (JP)**
- **SHIRAKAWA, Jun**
  **Tokyo, 146-8501 (JP)**

(74) Representative: **TBK**
**Bavariaring 4-6**
**80336 München (DE)**

# (54) CURABLE LIQUID DEVELOPER AND METHOD FOR PRODUCING CURABLE LIQUID DEVELOPER

(57) A curable liquid developer containing: a toner particle containing a pigment and a binder resin; a toner particle dispersing agent; and a cationically polymerizable liquid monomer, wherein the binder resin contains a polyester resin having an acid value of at least 5 mg KOH/g; the polyester resin contains an alcohol component-derived monomer unit and an acid component-derived monomer unit; the alcohol component-derived monomer unit and the acid component-derived monomer unit contain specific monomer units in specific proportions; and the content of the polyester resin in the binder resin is at least 50 mass% and not more than 100 mass%.

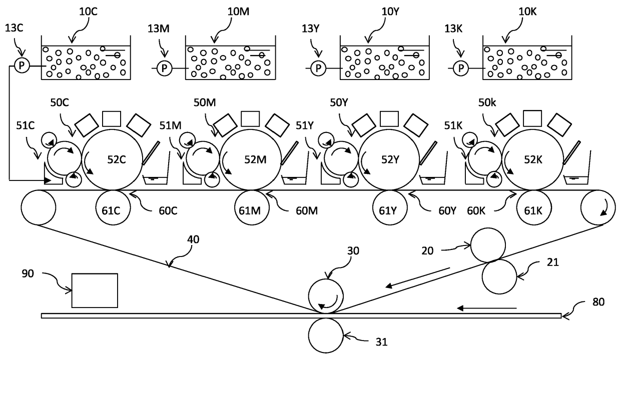


FIG.1



EP 3 410 217 A1

## Description

BACKGROUND OF THE INVENTION

Field of the Invention

The present invention relates to the curable liquid developer used in image-forming devices that employ an electrophotographic system, e.g., electrophotography, electrostatic recording and electrostatic printing. The present invention also relates to a method for producing this curable liquid developer.

Description of the Related Art

Copiers and image-forming devices, such as facsimile machines and printers, that use electrophotographic systems have been subject in recent years to increasing demands for and on colorization. Within this sphere, active development is underway on high-speed, high-image-quality digital printers that employ electrophotographic technology that uses liquid developers, which provide an excellent fine line image reproducibility, an excellent gradation reproducibility, an excellent color reproducibility, and excellent high-speed image formation. The development is required under these circumstances of liquid developers that have even better properties.

Dispersions of colored resin particles in an insulating liquid, e.g., a hydrocarbon organic solvent or a silicone oil, are known for conventional liquid developers. However, with such liquid developers, a substantial deterioration in image quality is caused when the insulating liquid remains present on the recording medium, e.g., paper and plastic film, and the insulating liquid must therefore be removed. A common method for removing the insulating liquid is to evaporatively remove the insulating liquid by the application of thermal energy. In this case, for example, vapors of a volatile organic solvent are released from the machine and large amounts of energy are consumed, and this has thus not necessarily been favorable from an environmental standpoint.

As a countermeasure here, Japanese Patent Application No. 2015-107396 discloses a method in which a reactive functional group-bearing insulating liquid is cured. This method, in which a reactive functional group-bearing monomer or oligomer is used as a curable insulating liquid, can form an image using less energy than heat fixing systems, which require the evaporative removal of the insulating liquid by the application of thermal energy.

However, this method has suffered from the following problem: both the dispersion stability of the toner particles in the liquid developer and the volume resistivity of the curable insulating liquid decline with elapsed time, and this has caused issues with image formation.

SUMMARY OF THE INVENTION

The present invention was pursued in view of the aforementioned circumstances and provides a curable liquid developer with which, even with elapsed time, the toner particle dispersion stability is maintained and reductions in the volume resistivity are inhibited. The present invention also provides a method for producing this curable liquid developer.

The present inventors obtained knowledge to the effect that inhibiting the timewise elution of components that cause a reduction in the volume resistivity of the cationically polymerizable liquid monomer is effective for achieving stable image formation from a curable liquid developer that uses a cationically polymerizable liquid monomer. The present invention was achieved based on this knowledge.

That is, the present invention in its first aspect provides a curable liquid developer as specified in claims 1 to 8.

The present invention in its second aspect provides a method of producing the aforementioned curable liquid developer as specified in claims 9 and 10.

Further features of the present invention will become apparent from the following description of exemplary embodiments with reference to the attached drawings.

BRIEF DESCRIPTION OF THE DRAWINGS

FIG. 1 is a schematic structural diagram of the main unit of an image-forming apparatus; and
FIG. 2 is a cross-sectional diagram of an image-forming unit.

DESCRIPTION OF THE EMBODIMENTS

Unless specifically indicated otherwise, the expressions "at least XX and not more than YY" and "XX to YY"

that give numerical value ranges refer in the present invention to numerical value ranges that include the lower limit and upper limit that are the end points.

In addition, "monomer unit" refers to the reacted form of the monomer substance in the polymer or resin.

The volume resistivity of a solution is known generally to depend on the concentration of ionic components.

The present inventors carried out various investigations into the volume resistivity decline with elapsed time and the decline in toner particle dispersion stability with elapsed time in the case of curable liquid developers that contain a cationically polymerizable liquid monomer.

It was discovered as a result that the decline in volume resistivity and dispersion stability with elapsed time is caused by the timewise elution into the cationically polymerizable liquid monomer of interactive components of the toner particle dispersing agent and binder resin.

Moreover, as a result of various investigations into the inhibition of this elution, the present inventors discovered that, when the binder resin has a certain specific resin structure, the timewise elution into the cationically polymerizable liquid monomer of these interactive components can be substantially inhibited. The present invention was achieved based on this discovery.

That is, the curable liquid developer according to the present invention (also referred to below simply as the liquid developer) contains: a toner particle having a pigment and a binder resin; a toner particle dispersing agent; and a cationically polymerizable liquid monomer, wherein the binder resin contains a polyester resin having an acid value of at least 5 mg KOH/g; the polyester resin contains an alcohol component-derived monomer unit and an acid component-derived monomer unit; the alcohol component-derived monomer unit contains a monomer unit derived from an aliphatic diol having at least 2 and not more than 12 carbons; in the alcohol component-derived monomer unit, the content of the monomer unit derived from the aliphatic diol having at least 2 and not more than 12 carbons is at least 50 mol% and not more than 100 mol%; the acid component-derived monomer unit contains a monomer unit derived from an aromatic dicarboxylic acid having at least 8 and not more than 12 carbons; in the acid component-derived monomer unit, the content of the monomer unit derived from the aromatic dicarboxylic acid having at least 8 and not more than 12 carbons is at least 75 mol% and not more than 100 mol%; and in the binder resin, the content of the polyester resin is at least 50 mass% and not more than 100 mass%.

While the details of the mechanism underlying the preceding are unclear, it is hypothesized that an enhanced resin-to-resin interaction, and particularly an enhanced hydrogen bondability, due to an increased ester group concentration in the binder resin result in a substantial inhibition of the timewise elution of the aforementioned interactive components into the cationically polymerizable liquid monomer.

Because this curable liquid developer has the construction described above, even with elapsed time it provides an inhibition of the reduction in the dispersion stability of the toner particles in the liquid developer and an inhibition of the reduction in the volume resistivity of the liquid developer. As a result, the liquid developer can be cured using less energy and with a low environmental burden, but without triggering a reduction in the image-forming performance.

The binder resin here contains a polyester resin having an acid value of at least 5 mg KOH/g.

This polyester resin contains an alcohol component-derived monomer unit and an acid component-derived monomer unit.

This alcohol component-derived monomer unit contains a monomer unit derived from an aliphatic diol having at least 2 and not more than 12 carbons.

The content, in this alcohol component-derived monomer unit, of the monomer unit derived from an aliphatic diol having at least 2 and not more than 12 carbons is at least 50 mol% and not more than 100 mol%.

The content of the monomer unit derived from an aliphatic diol having at least 2 and not more than 12 carbons is preferably at least 70 mol% and not more than 100 mol%, more preferably at least 85 mol% and not more than 100 mol%, and still more preferably at least 95 mol% and not more than 100 mol%.

The acid component-derived monomer unit, on the other hand, contains a monomer unit derived from an aromatic dicarboxylic acid having at least 8 and not more than 12 carbons.

The content, in this acid component-derived monomer unit, of the monomer unit derived from an aromatic dicarboxylic acid having at least 8 and not more than 12 carbons is at least 75 mol% and not more than 100 mol%.

The content of the monomer unit derived from an aromatic dicarboxylic acid having at least 8 and not more than 12 carbons is preferably at least 85 mol% and not more than 100 mol%, more preferably at least 90 mol% and not more than 100 mol%, and still more preferably at least 95 mol% and not more than 100 mol%.

Reductions in the toner particle dispersion stability in the liquid developer and reductions in the volume resistivity of the liquid developer can be significantly suppressed because the binder resin has the structure described above.

While the detailed mechanism is unclear, it is hypothesized that an enhanced resin-to-resin interaction, and particularly an enhanced hydrogen bondability, due to an increased ester group concentration in the binder resin result in a reduced solubility by resin components in the cationically polymerizable liquid monomer and thus an inhibition of timewise elution.

The hydrogen bondability of carboxylic acid in support of the resin-to-resin interaction cannot be exhibited when

the acid value of the polyester resin present in the binder resin is less than 5 mg KOH/g.

The acid value of the polyester resin is preferably at least 7 mg KOH/g, more preferably at least 10 mg KOH/g, and still more preferably at least 15 mg KOH/g.

While the upper limit on the acid value of the polyester resin is not particularly limited, it is preferably not more than 100 mg KOH/g and is more preferably not more than 50 mg KOH/g.

The acid value of the polyester resin can be controlled through, for example, the type of alcohol component and acid component constituting the polyester resin, the number of end groups in the polyester resin, the number of carboxy groups in the end group population, and so forth.

The content of polyester resin having an acid value of at least 5 mg KOH/g in the binder resin is at least 50 mass% and not more than 100 mass%.

When the content of this polyester resin is less than 50 mass%, the resin-to-resin interaction and particularly the hydrogen bondability are reduced due to a reduction in the ester group concentration in the binder resin.

The content of this polyester resin is preferably at least 70 mass% and not more than 100 mass% and is more preferably at least 80 mass% and not more than 100 mass%.

The aliphatic diol having at least 2 and not more than 12 carbons can be exemplified by the following:
ethylene glycol, 1,2-propanediol, 1,3-propanediol, 1,4-butanediol, neopentyl glycol, 1,4-butenediol, 1,5-pentanediol, 1,6-hexanediol, 1,7-heptanediol, 1,8-octanediol, 1,4-cyclohexanedimethanol, 1,9-nonanediol, 1,10-decanediol, 1,11-undecanediol, and 1,12-dodecanediol.

Among the preceding, aliphatic diols having at least 2 and not more than 5 carbons are preferred and ethylene glycol and neopentyl glycol are more preferred.

The alcohol component-derived monomer unit preferably contains a monomer unit derived from aliphatic diol having at least 2 and not more than 5 carbons.

The content, in this alcohol component-derived monomer unit, of the monomer unit derived from aliphatic diol having at least 2 and not more than 5 carbons is preferably at least 50 mol% and not more than 100 mol%, more preferably at least 70 mol% and not more than 100 mol%, still more preferably at least 85 mol% and not more than 100 mol%, and particularly preferably at least 95 mol% and not more than 100 mol%.

The alcohol component-derived monomer unit more preferably contains at least one monomer unit selected from the group consisting of an ethylene glycol-derived monomer unit and a neopentyl glycol-derived monomer unit.

The content, in the alcohol component-derived monomer unit, of the at least one monomer unit selected from the group consisting of an ethylene glycol-derived monomer unit and a neopentyl glycol-derived monomer unit is preferably at least 50 mol% and not more than 100 mol%, more preferably at least 70 mol% and not more than 100 mol%, still more preferably at least 85 mol% and not more than 100 mol%, and particularly preferably at least 95 mol% and not more than 100 mol%.

The incorporated molar ratio (EG : NPG) between the ethylene glycol-derived monomer unit (EG) and the neopentyl glycol-derived monomer unit (NPG) is preferably 10 : 90 to 90 : 10 and is more preferably 30 : 70 to 70 : 30.

To the degree that the effects of the present invention are not impaired, this polyester resin may contain an alcohol component-derived monomer unit other than the monomer unit derived from aliphatic diol having at least 2 and not more than 12 carbons.

The following components are specific examples of the alcohol component:

diols such as diethylene glycol, triethylene glycol, and dipropylene glycol;
aromatic diols such as bisphenol A, hydrogenated bisphenol A, and alkylene oxide adducts on bisphenol A, e.g., polyoxypropylene(2.2)-2,2-bis(4-hydroxyphenyl)propane, polyoxypropylene(3.3)-2,2-bis(4-hydroxyphenyl)propane, polyoxyethylene(2.0)-2,2-bis(4-hydroxyphenyl)propane, polyoxypropylene(2.0)-polyoxyethylene(2.0)-2,2-bis(4-hydroxyphenyl)propane, and polyoxypropylene(6)-2,2-bis(4-hydroxyphenyl)propane; and
at least trihydric polyhydric alcohols such as sorbitol, 1,2,3,6-hexanetetrol, 1,4-sorbitan, pentaerythritol, dipentaerythritol, tripentaerythritol, 1,2,4-butanetriol, 1,2,5-pentanetriol, glycerol, 2-methylpropanetriol, 2-methyl-1,2,4-butanetriol, trimethylolethane, trimethylolpropane, and 1,3,5-trihydroxymethylbenzene.

For example, the alcohol component-derived monomer unit may optionally contain a monomer unit derived from the aforementioned aromatic diol. In this case, the content of the aromatic diol-derived monomer unit in the alcohol component-derived monomer unit is preferably at least 0 mol% and less than 50 mol%, more preferably at least 0 mol% and less than 30 mol%, still more preferably at least 0 mol% and less than 15 mol%, and particularly preferably at least 0 mol% and less than 5 mol%.

The aforementioned aromatic dicarboxylic acid having at least 8 and not more than 12 carbons can be exemplified by the following:
aromatic dicarboxylic acids such as phthalic acid, isophthalic acid, and terephthalic acid, and their anhydrides. Isophthalic acid and terephthalic acid are preferred among the preceding.

In addition, the acid component-derived monomer unit preferably contains at least one monomer unit selected from the group consisting of a terephthalic acid-derived monomer unit and an isophthalic acid-derived monomer unit.

The content, in the acid component-derived monomer unit, of the at least one monomer unit selected from the group consisting of a terephthalic acid-derived monomer unit and an isophthalic acid-derived monomer unit is preferably at least 75 mol% and not more than 100 mol%, more preferably at least 85 mol% and not more than 100 mol%, still more preferably at least 90 mol% and not more than 100 mol%, and particularly preferably at least 95 mol% and not more than 100 mol%.

To the degree that the effects of the present invention are not impaired, the polyester resin may contain an acid component-derived monomer unit other than the aforementioned monomer unit derived from an aromatic dicarboxylic acid having at least 8 and not more than 12 carbons.

The following components are specific examples of the acid component:

aliphatic dicarboxylic acids such as succinic acid, adipic acid, sebacic acid, and azelaic acid, and their anhydrides; succinic acid substituted by an alkyl group or alkenyl group having 6 to 18 carbons, and their anhydrides; unsaturated dicarboxylic acids such as fumaric acid, maleic acid, and citraconic acid, and their anhydrides; and polybasic carboxylic acids such as trimellitic acid, pyromellitic acid, and benzophenonetetracarboxylic acid, and their anhydrides.

For example, the acid component-derived monomer unit may optionally contain a monomer unit derived from an aliphatic dicarboxylic acid. In such a case, the content, in the acid component-derived monomer unit, of this aliphatic dicarboxylic acid-derived monomer unit is preferably at least 0 mol% and less than 25 mol%, more preferably at least 0 mol% and less than 15 mol%, still more preferably at least 0 mol% and less than 10 mol%, and particularly preferably at least 0 mol% and less than 5 mol%.

To the degree that the effects of the present invention are not impaired, the binder resin can contain a resin or polymer other than the polyester resin having an acid value of at least 5 mg KOH/g.

A single such resin or polymer can be used by itself or two or more can be used in combination. The type of resin or polymer can be exemplified by known resins and polymers that exercise a fixing capability versus the material on which fixing is to occur, e.g., paper and plastic film.

Specific examples are homopolymers of styrene and its substituted forms, e.g., polystyrene, poly-p-chlorostyrene, and polyvinyltoluene; styrenic copolymers such as styrene-p-chlorostyrene copolymers, styrene-vinyltoluene copolymers, styrene-vinylnaphthalene copolymers, styrene-acrylate ester copolymers, styrene-methacrylate ester copolymers, styrene-methyl $\alpha$-chloromethacrylate copolymers, styrene-acrylonitrile copolymers, styrene-vinyl methyl ether copolymers, styrene-vinyl ethyl ether copolymers, styrene-vinyl methyl ketone copolymers, and styrene-acrylonitrile copolymers; as well as polyester resins having an acid value of less than 5 mg KOH/g, polyvinyl chloride, phenolic resins, natural resin-modified phenolic resins, natural resin-modified maleic acid resins, acrylic resins, methacrylic resins, polyvinyl acetate, silicone resins, polyurethane resins, polyamide resins, furan resins, epoxy resins, xylene resins, polyvinyl butyral, terpene resins, coumarone-indene resins, and petroleum resins.

The binder resin incorporated in the toner particle preferably is insoluble in the cationically polymerizable liquid monomer.

Here, insoluble in the cationically polymerizable liquid monomer refers to the criterion that not more than 1 mass part of the resin dissolves in 100 mass parts of the cationically polymerizable liquid monomer at a temperature of 25°C.

There are no particular limitations on the pigment that is incorporated in the toner particle, and any of the generally commercially available organic pigments, inorganic pigments, pigments dispersed in, for example, an insoluble resin as the dispersion medium, pigments having a resin grafted on the pigment surface, and so forth, may be used.

This pigment can be exemplified by the following in the case of yellow pigments:

C. I. Pigment Yellow 1, 2, 3, 4, 5, 6, 7, 10, 11, 12, 13, 14, 15, 16, 17, 23, 62, 65, 73, 74, 83, 93, 94, 95, 97, 109, 110, 111, 120, 127, 128, 129, 147, 151, 154, 155, 168, 174, 175, 176, 180, 181, and 185; and C. I. Vat Yellow 1, 3, and 20.

The following are examples in the case of red or magenta pigments: C.I. Pigment Red 1, 2, 3, 4, 5, 6, 7, 8, 9, 10, 11, 12, 13, 14, 15, 16, 17, 18, 19, 21, 22, 23, 30, 31, 32, 37, 38, 39, 40, 41, 48:2, 48:3, 48:4, 49, 50, 51, 52, 53, 54, 55, 57:1, 58, 60, 63, 64, 68, 81:1, 83, 87, 88, 89, 90, 112, 114, 122, 123, 146, 147, 150, 163, 184, 202, 206, 207, 209, 238, and 269; C. I. Pigment Violet 19; and C. I. Vat Red 1, 2, 10, 13, 15, 23, 29, and 35.

The following are examples in the case of blue or cyan pigments:

C. I. Pigment Blue 2, 3, 15:2, 15:3, 15:4, 16, and 17; C. I. Vat Blue 6; C. I. Acid Blue 45; and copper phthalocyanine pigments having 1 to 5 phthalimidomethyl groups substituted on the phthalocyanine skeleton.

Green pigments can be exemplified by the following:

C. I. Pigment Green 7, 8, and 36.

Orange pigments can be exemplified by the following:

C. I. Pigment Orange 66 and 51.

Black pigments can be exemplified by the following:

carbon black, titanium black, and aniline black.

White pigments can be exemplified by the following:
basic lead carbonate, zinc oxide, titanium oxide, and strontium titanate.

Dispersing means adapted to the toner particle production method may be used to disperse the pigment in the toner particle. Devices that can be used as this dispersing means are, for example, a ball mill, sand mill, attritor, roll mill, jet mill, homogenizer, paint shaker, kneader, agitator, Henschel mixer, colloid mill, ultrasonic homogenizer, pearl mill and wet jet mill.

The pigment content, per 100 mass parts of the binder resin, is preferably at least 10 mass parts and not more than 100 mass parts, more preferably at least 20 mass parts and not more than 80 mass parts, and still more preferably at least 25 mass parts and not more than 50 mass parts.

A pigment dispersing agent and/or a pigment dispersing auxiliary agent may also be added during dispersion of the pigment.

The pigment dispersing agent and pigment dispersing auxiliary agent can be exemplified by hydroxyl group-bearing carboxylate esters, the salts of long-chain polyaminoamides and high molecular weight acid esters, the salts of high molecular weight polycarboxylic acids, high molecular weight unsaturated acid esters, high molecular weight copolymers, polyesters and their modifications, modified polyacrylates, aliphatic polybasic carboxylic acids, naphthalenesulfonic acid/formalin condensates, polyoxyethylene alkyl phosphate esters, and pigment derivatives.

A commercially available pigment dispersing agent, e.g., the Solsperse series from The Lubrizol Corporation and the Vylon (registered trademark) UR series from Toyobo Co., Ltd., may also be used. A synergist adapted to the particular pigment may also be used.

The amount of addition of the pigment dispersing agent and pigment dispersing auxiliary agent, per 100 mass parts of the pigment, is preferably approximately at least 1 mass part and not more than 50 mass parts.

There are no particular limitations on the method for adding the pigment dispersing agent and pigment dispersing auxiliary agent, but addition in the step of dispersing the pigment is preferred from the standpoint of the pigment dispersibility.

The toner particle dispersing agent brings about a stable dispersion of the toner particle in the cationically polymerizable liquid monomer.

There are no particular limitations on the structure of the toner particle dispersing agent, but the presence of the amino group is preferred.

The toner particle dispersion stability, even with elapsed time, can be further enhanced by the presence of the amino group.

The amine value of the toner particle dispersing agent is preferably at least 10 mg KOH/g and not more than 200 mg KOH/g and is more preferably at least 20 mg KOH/g and not more than 100 mg KOH/g.

By having the amine value satisfy the indicated range, the interaction with the polyester resin is made more significant and inhibition of the dissolution of ionic components into the cationically polymerizable liquid monomer is facilitated.

In addition, the toner particle dispersing agent may dissolve or disperse in the cationically polymerizable liquid monomer.

Commercially available toner particle dispersing agents can be exemplified by Ajisper PB817 (reaction product of a polyallylamine with the self-condensate of 12-hydroxystearic acid, Ajinomoto Fine-Techno Co., Inc.), Solsperse 11200 and 13940 (reaction product of polyethylenepolyamine with a self-condensate of 12-hydroxystearic acid), and 17000 and 18000 (Lubrizol Japan Limited.).

Viewed from the perspectives of the toner particle dispersion stability and retention of the curability of the liquid developer, the content of the toner particle dispersing agent, per 100 mass parts of the toner particle, is preferably at least 0.5 mass parts and not more than 20 mass parts. A single toner particle dispersing agent can be used by itself or two or more can be used in combination.

The cationically polymerizable liquid monomer exhibits an electrically insulating character, and its volume resistivity is preferably at least $1 \times 10^9\ \Omega \cdot cm$ and not more than $1 \times 10^{15}\ \Omega \cdot cm$.

The viscosity of the cationically polymerizable liquid monomer at 25°C is preferably approximately at least 0.5 mPa · s and less than 100 mPa · s and is more preferably approximately at least 0.5 mPa · s and less than 20 mPa · s.

The type of the cationically polymerizable liquid monomer is not particularly limited, but a cationically polymerizable liquid monomer should be selected that at a temperature of 25°C dissolves not more than 1 mass part of the binder resin per 100 mass parts of the cationically polymerizable liquid monomer.

Specific examples are vinyl ether compounds and cyclic ether compounds such as epoxy compounds and oxetane compounds.

The cationically polymerizable liquid monomer for the curable liquid developer preferably contains a vinyl ether compound from the standpoint of achieving a greater enhancement of the toner particle dispersion stability and achieving a greater suppression of the reduction in the volume resistivity.

Vinyl ether compounds, because they exhibit little polarization in the intramolecular electron density, provide

a greater suppression of elution from the polyester resin.

A vinyl ether compound refers to a compound that has a vinyl ether structure (-CH=CH-O-C-).

This vinyl ether structure is preferably given by R'-CH=CH-O-C- (R' is hydrogen or alkyl having 1 to 3 carbons and is preferably hydrogen or methyl).

In a preferred embodiment, this vinyl ether compound also is a compound does not have a heteroatom outside of the vinyl ether structure.

Here, "heteroatom" denotes an atom other than the carbon atom and hydrogen atom.

When the vinyl ether compound is a compound that does not have a heteroatom outside of the vinyl ether structure, the intramolecular polarization of the electron density is suppressed and inhibition of the elution of the toner particle dispersing agent is facilitated and the curability can be further enhanced.

In another preferred embodiment, the vinyl ether compound is a compound that does not have a carbon-carbon double bond outside of the vinyl ether structure.

When the vinyl ether compound is a compound that does not have a carbon-carbon double bond outside of the vinyl ether structure, polarization of the electron density is suppressed and the inhibition of elution of the toner particle dispersing agent is facilitated and the curability can be further enhanced.

The vinyl ether compound is preferably a compound represented by the following formula (1).

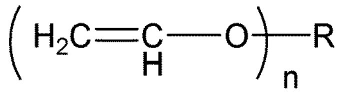
(1)

[In formula (1), n represents the number of vinyl ether structures in one molecule and is an integer having a value of at least 1 and not more than 4. R is an n-valent hydrocarbon group.]

n is preferably an integer with a value of a least 1 and not more than 3.

R preferably is a group selected from straight chain or branched, saturated or unsaturated aliphatic hydrocarbon groups having at least 1 and not more than 20 carbons, saturated or unsaturated alicyclic hydrocarbon groups having at least 5 and not more than 12 carbons, and aromatic hydrocarbon groups having at least 6 and not more than 14 carbons, and these alicyclic hydrocarbon groups and aromatic hydrocarbon groups may have a saturated or unsaturated aliphatic hydrocarbon group having at least 1 and not more than 4 carbons.

R is more preferably a straight chain or branched saturated aliphatic hydrocarbon group having at least 4 and not more than 18 carbons.

Specific examples of the vinyl ether compound are given below [exemplary compounds B-1 to B-30], but there is no limitation to or by these examples.

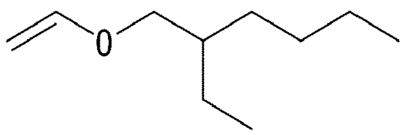
(B－1)

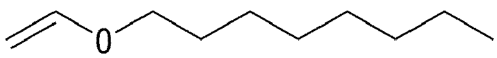
(B－2)

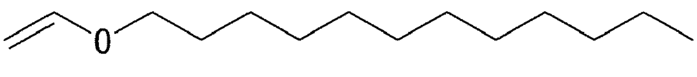
(B－3)

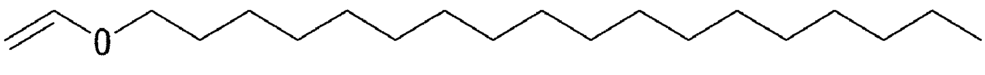
(B－4)

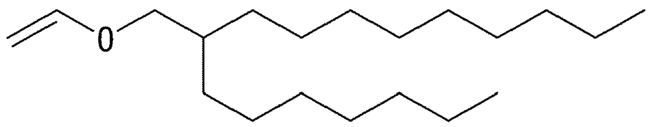

(B－5)

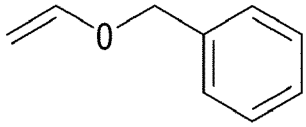

(B－6)

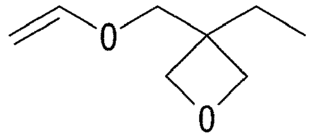

(B－7)

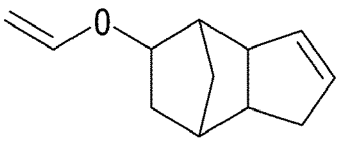

(B－8)

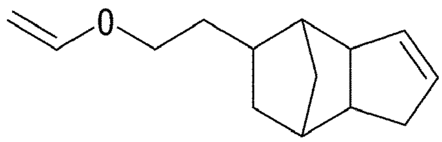

(B－9)

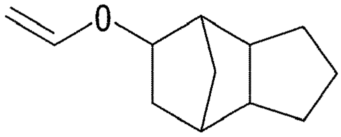

(B－1 0)

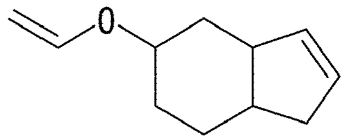

(B－1 1)

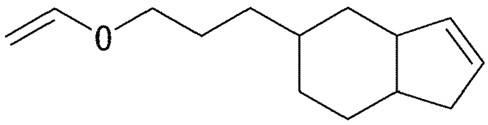

(B－1 2)

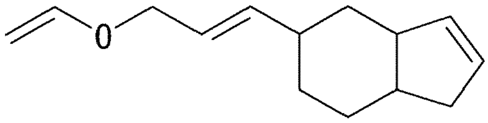

(B－1 3)

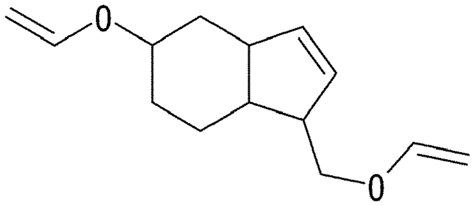

(B－1 4)

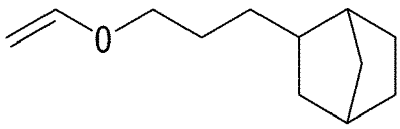

(B－1 5)

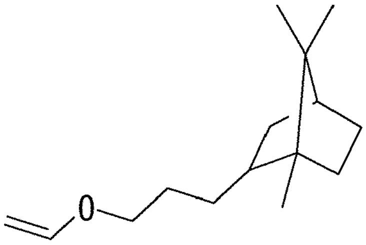

(B－１６)

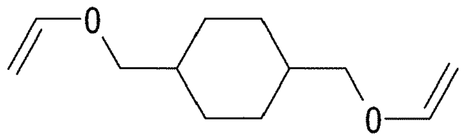

(B－１７)

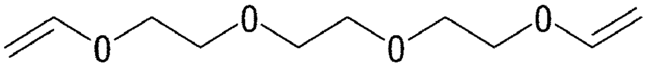

(B－１８)

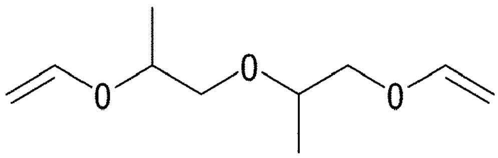

(B－１９)

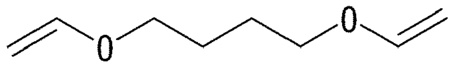

(B－２０)

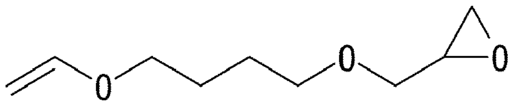

(B－２１)

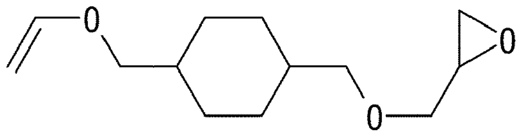

(B－２２)

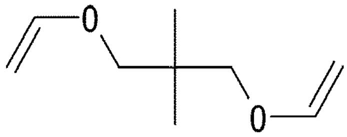

(B－２３)

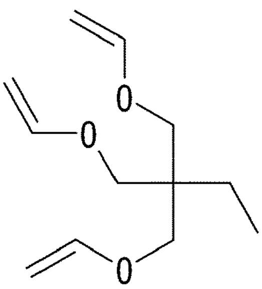

(B－２４)

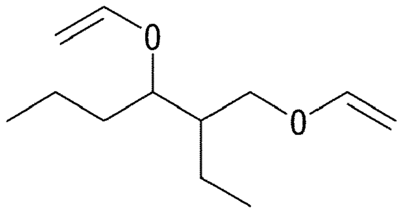

(B-25)

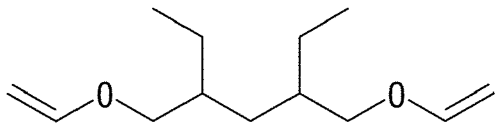

(B-26)

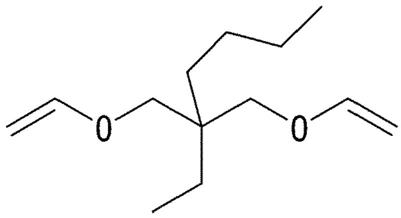

(B-27)

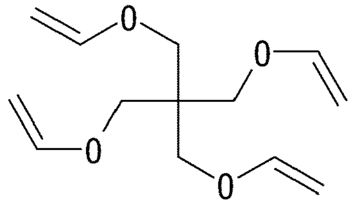

(B-28)

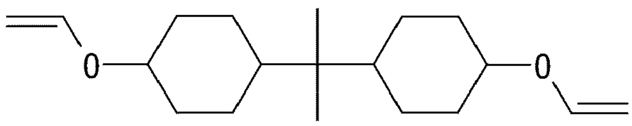

(B-29)

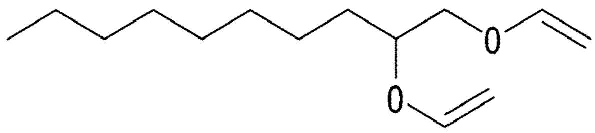

(B-30)

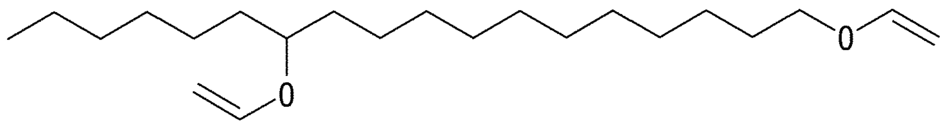

(B-31)

The following, for example, are preferred among the preceding: dodecyl vinyl ether (B-3), dicyclopentadiene vinyl ether (B-8), cyclohexanedimethanol divinyl ether (B-17), tricyclodecane vinyl ether (B-10), trimethylolpropane trivinyl ether (B-24), 2-ethyl-1,3-hexanediol divinyl ether (B-25), 2,4-diethyl-1,5-pentanediol divinyl ether (B-26), 2-butyl-2-ethyl-1,3-propanediol divinyl ether (B-27), neopentyl glycol divinyl ether (B-23), pentaerythritol tetravinyl ether (B-28), 1,2-decanediol divinyl ether (B-30), and 1,12-octadecanediol divinyl ether (B-31).

The curable liquid developer may contain a photopolymerization initiator.

The photopolymerization initiator is a compound that reacts to light at a designated wavelength and thereby generates an acid or a radical. The photopolymerization initiator can be exemplified by onium salt compounds, sulfone compounds, sulfonate ester compounds, sulfonimide compounds, and diazomethane compounds, but is not limited to these.

Photopolymerization initiators represented by the following formula (2) are examples from the standpoint of inhibiting reductions in the volume resistivity of the cationically polymerizable liquid monomer.

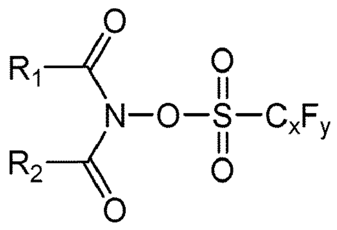

(2)

[In formula (2), $R_1$ and $R_2$ are bonded to each other to form a ring structure; x represents an integer from at least 1 to not more than 8; and y represents an integer from at least 3 to not more than 17.]

Compounds with formula (2) undergo photolysis upon exposure to ultraviolet radiation to produce a sulfonic acid, which is a strong acid. In addition, a sensitizer may be used in combination therewith, and decomposition of the polymerization initiator with the generation of a sulfonic acid may also be brought about with the absorption of ultraviolet radiation by the sensitizer acting as a trigger.

The ring structure formed by the bonding of $R_1$ with $R_2$ can be exemplified by 5-membered rings and 6-membered rings. Specific examples of the ring structure formed by the bonding of $R_1$ with $R_2$ are succinimide structures, phthalimide structures, norbornene dicarboximide structures, naphthalene dicarboximide structures, cyclohexane dicarboximide structures, and epoxycyclohexene dicarboximide structures.

These ring structures may also have, for example, the following as substituents: an alkyl group, an alkyloxy group, an alkylthio group, an aryl group, an aryloxy group and an arylthio group.

The $C_xF_y$ in formula (2) can be exemplified by straight-chain alkyl groups in which the hydrogen atom has been substituted by the fluorine atom (RF1), branched-chain alkyl groups in which the hydrogen atom has been substituted by the fluorine atom (RF2), cycloalkyl groups in which the hydrogen atom has been substituted by the fluorine atom (RF3), and aryl groups in which the hydrogen atom has been substituted by the fluorine atom (RF4).

The straight-chain alkyl groups in which the hydrogen atom has been substituted by the fluorine atom (RF1) can be exemplified by the trifluoromethyl group (x = 1, y = 3), pentafluoroethyl group (x = 2, y = 5), heptafluoro-n-propyl group (x = 3, y = 7), nonafluoro-n-butyl group (x = 4, y = 9), perfluoro-n-hexyl group (x = 6, y = 13), and perfluoro-n-octyl group (x = 8, y = 17).

The branched-chain alkyl groups in which the hydrogen atom has been substituted by the fluorine atom (RF2) can be exemplified by the perfluoroisopropyl group (x = 3, y = 7), perfluoro-tert-butyl group (x = 4, y = 9), and perfluoro-2-ethylhexyl group (x = 8, y = 17).

The cycloalkyl groups in which the hydrogen atom has been substituted by the fluorine atom (RF3) can be exemplified by the perfluorocyclobutyl group (x = 4, y = 7), perfluorocyclopentyl group (x = 5, y = 9), perfluorocyclohexyl group (x = 6, y = 11), and perfluoro(1-cyclohexyl)methyl group (x = 7, y = 13).

The aryl groups in which the hydrogen atom has been substituted by the fluorine atom (RF4) can be exemplified by the pentafluorophenyl group (x = 6, y = 5) and 3-trifluoromethyltetrafluorophenyl group (x = 7, y = 7).

For the $C_xF_y$ in general formula (2), the straight-chain alkyl groups (RF1), branched-chain alkyl groups (RF2), and aryl groups (RF4) are preferred from the standpoint of the ease of acquisition and the decomposability of the sulfonate ester moiety. The straight-chain alkyl groups (RF1) and aryl groups (RF4) are more preferred. The trifluoromethyl group (x = 1, y = 3), pentafluoroethyl group (x = 2, y = 5), heptafluoro-n-propyl group (x = 3, y = 7), nonafluoro-n-butyl group (x = 4, y = 9), and pentafluorophenyl group (x = 6, y = 5) are still more preferred.

A single photopolymerization initiator can be used by itself or two or more can be used in combination.

The content of the photopolymerization initiator in the curable liquid developer is not particularly limited, but, expressed per 100 mass parts of the cationically polymerizable liquid monomer, is preferably at least 0.01 mass parts and not more than 5 mass parts, more preferably at least 0.05 mass parts and not more than 1 mass part, and even more preferably at least 0.1 mass parts and not more than 0.5 mass parts.

Specific examples of the photopolymerization initiator with formula (2) [exemplary compounds A-1 to A-27] are provided below, but the present invention is not limited to or by these examples.

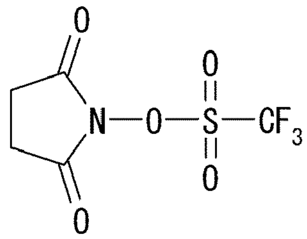

(A－1)

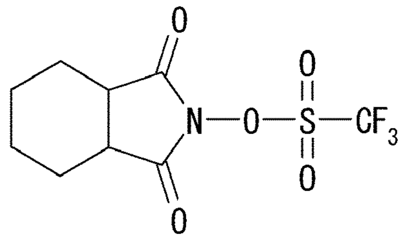

(A－2)

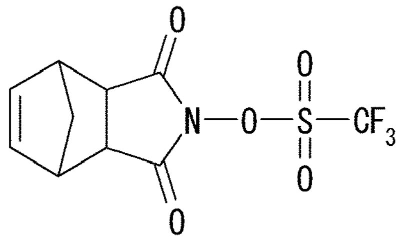

(A－3)

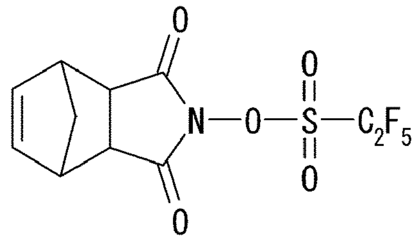

(A－4)

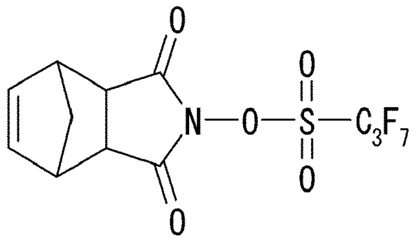

(A－5)

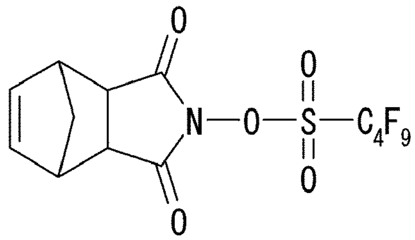

(A－6)

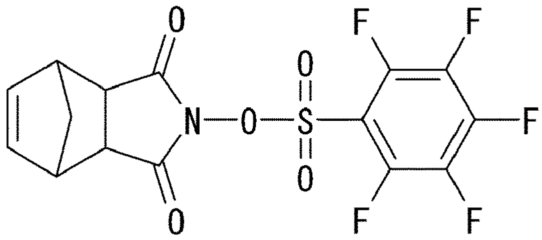

(A－7)

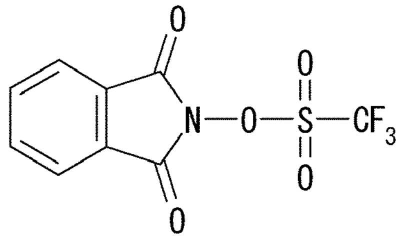

(A－8)

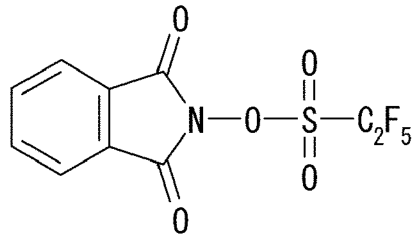

(A－9)

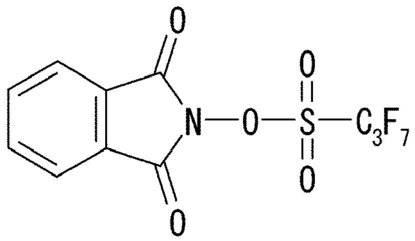

(A－１０)

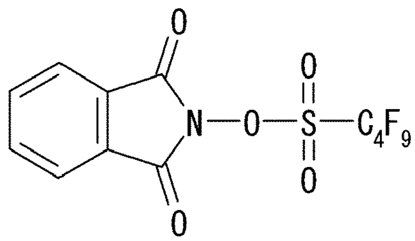

(A－１１)

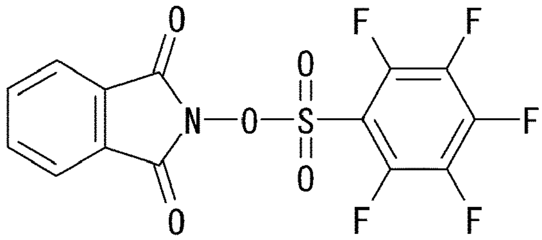

(A－１２)

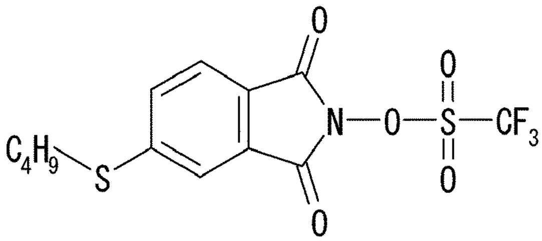

(A－１３)

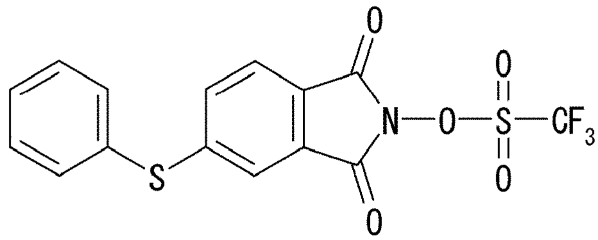

(A－１４)

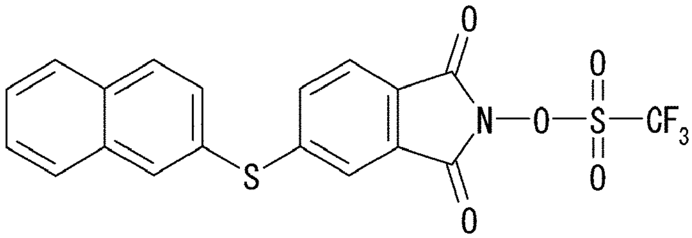

(A－１５)

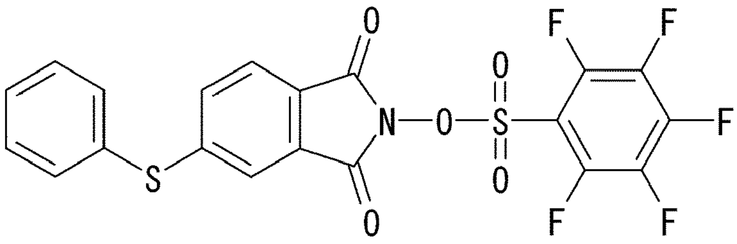

（A－１６）

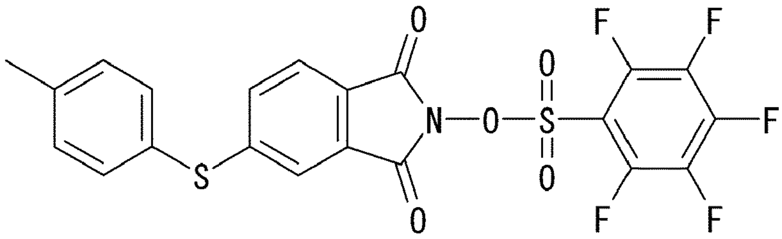

（A－１７）

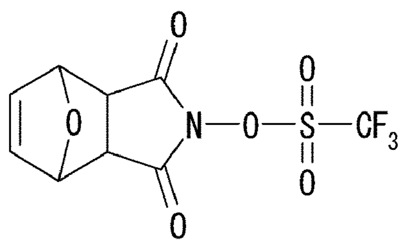

（A－１８）

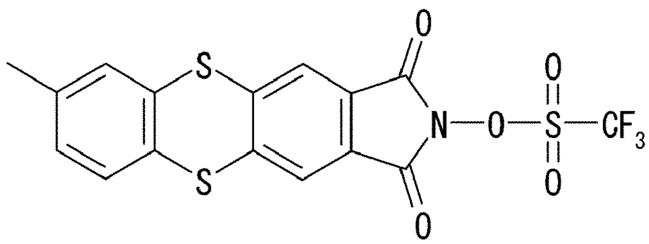

（A－１９）

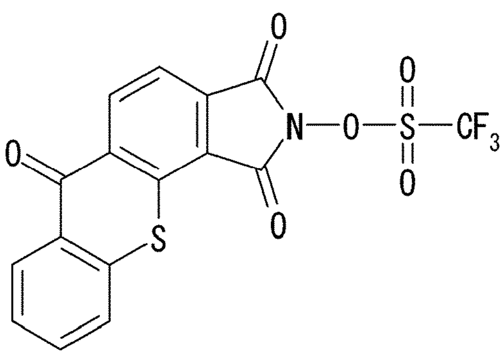

（A－２０）

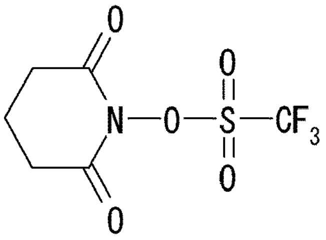

(A-21)

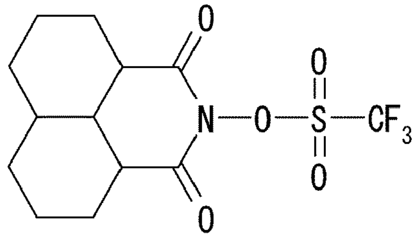

(A-22)

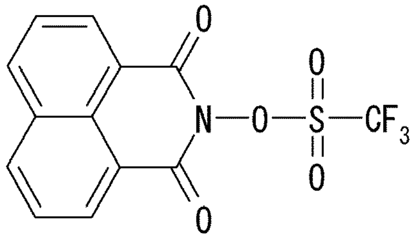

(A-23)

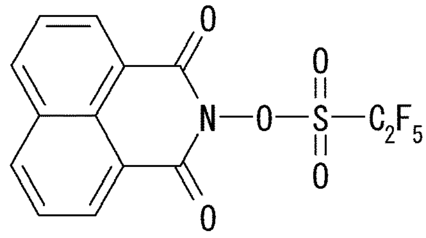

(A-24)

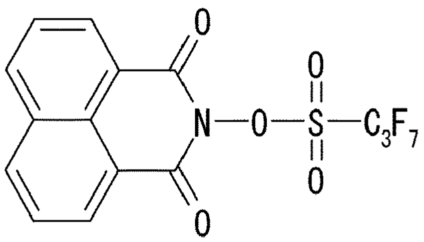

(A-25)

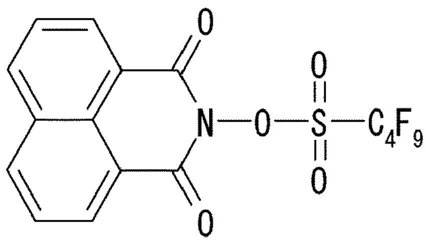

(A-26)

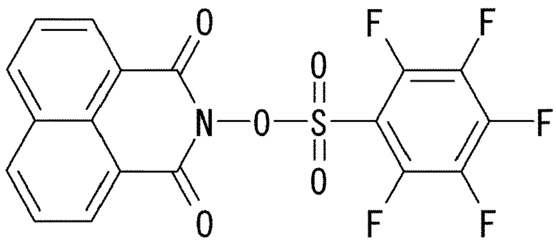

(A-27)

The curable liquid developer may as necessary contain a charge control agent. A known charge control agent can be used.

Examples of specific compounds are as follows:

fats and oils such as linseed oil and soy oil; alkyd resins; halogen polymers; aromatic polycarboxylic acids; acidic group-containing water-soluble dyes; oxidative condensates of aromatic polyamines; metal soaps such as cobalt naphthenate, nickel naphthenate, iron naphthenate, zinc naphthenate, cobalt octanoate, nickel octanoate, zinc octanoate, cobalt dodecanoate, nickel dodecanoate, zinc dodecanoate, aluminum stearate, and cobalt 2-ethylhexanoate; metal sulfonates such as petroleum-based metal sulfonates and metal salts of sulfosuccinate esters; phospholipids such as lecithin and hydrogenated lecithin; metal salicylates such as metal t-butylsalicylate complexes; polyvinylpyrrolidone resins; polyamide resins; sulfonic acid-containing resins; and hydroxybenzoic acid derivatives.

A charging auxiliary may optionally be incorporated in the toner particle with the goal of adjusting the charging performance of the toner particle. A known charging auxiliary can be used.

Examples of specific compounds are as follows: metal soaps such as zirconium naphthenate, cobalt naphthenate, nickel naphthenate, iron naphthenate, zinc naphthenate, cobalt octanoate, nickel octanoate, zinc octanoate,

cobalt dodecanoate, nickel dodecanoate, zinc dodecanoate, aluminum stearate, aluminum tristearate, and cobalt 2-ethylhexanoate; metal sulfonates such as petroleum-based metal sulfonates and the metal salts of sulfosuccinate esters; phospholipids such as lecithin; metal salicylates such as metal t-butylsalicylate complexes; polyvinylpyrrolidone resins; polyamide resins; sulfonic acid-containing resins; and hydroxybenzoic acid derivatives.

As necessary, a sensitizer may be added to the curable liquid developer with the goals of, for example, improving the acid-generating efficiency of the photopolymerization initiator and extending the photosensitive wavelengths to longer wavelengths.

There are no particular limitations on the sensitizer and any sensitizer may be used that is capable of sensitizing the photopolymerization initiator through an electron transfer mechanism or energy transfer mechanism.

Specific examples include aromatic polycondensed ring compounds such as anthracene, 9,10-dialkoxyanthracene, pyrene, and perylene; aromatic ketone compounds such as acetophenone, benzophenone, thioxanthone, and Michler's ketone; and heterocyclic compounds such as phenothiazine and N-aryloxazolidinone.

The amount of addition is selected as appropriate in correspondence to the goal, and is generally approximately at least 0.1 mass parts and not more than 10 mass parts and is preferably at least 1 mass part and not more than 5 mass parts per 1 mass part of the photopolymerization initiator.

A auxiliary sensitizer may also be added to the curable liquid developer with the goal of improving the electron transfer efficiency or energy transfer efficiency between the aforementioned sensitizer and the photopolymerization initiator.

The auxiliary sensitizer can be specifically exemplified by the following: naphthalene compounds such as 1,4-dihydroxynaphthalene, 1,4-dimethoxynaphthalene, 1,4-diethoxynaphthalene, 4-methoxy-1-naphthol, and 4-ethoxy-1-naphthol; and benzene compounds such as 1,4-dihydroxybenzene, 1,4-dimethoxybenzene, 1,4-diethoxybenzene, 1-methoxy-4-phenol, and 1-ethoxy-4-phenol.

The amount of auxiliary sensitizer addition is selected as appropriate in correspondence to the goal, but is generally approximately at least 0.1 mass parts and not more than 10 mass parts and preferably at least 0.5 mass parts and not more than 5 mass parts per 1 mass part of the sensitizer.

A cationic polymerization inhibitor may also be added to the curable liquid developer.

The cationic polymerization inhibitor can be exemplified by alkali metal compounds and/or alkaline-earth metal compounds and by amines.

The amines can be exemplified by alkanolamines, N,N-dimethylalkylamines, N,N-dimethylalkenylamines, and N,N-dimethylalkynylamines.

The amines can be specifically exemplified by triethanolamine, triisopropanolamine, tributanolamine, N-ethyldiethanolamine, propanolamine, n-butylamine, sec-butylamine, 2-aminoethanol, 2-methylaminoethanol, 3-methylamino-1-propanol, 3-methylamino-1,2-propanediol, 2-ethylaminoethanol, 4-ethylamino-1-butanol, 4-(n-butylamino)-1-butanol, 2-(t-butylamino)ethanol, N,N-dimethylundecanolamine, N,N-dimethyldodecanolamine, N,N-dimethyltridecanolamine, N,N-dimethyltetradecanolamine, N,N-dimethylpentadecanolamine, N,N-dimethylnonadecylamine, N,N-dimethylicosylamine, N,N-dimethyleicosylamine, N,N-dimethylheneicosylamine, N,N-dimethyldocosylamine, N,N-dimethyltricosylamine, N,N-dimethyltetracosylamine, N,N-dimethylpentacosylamine, N,N-dimethylpentanolamine, N,N-dimethylhexanolamine, N,N-dimethylheptanolamine, N,N-dimethyloctanolamine, N,N-dimethylnonanolamine, N,N-dimethyldecanolamine, N,N-dimethylnonylamine, N,N-dimethyldecylamine, N,N-dimethylundecylamine, N,N-dimethyldodecylamine, N,N-dimethyltridecylamine, N,N-dimethyltetradecylamine, N,N-dimethylpentadecylamine, N,N-dimethylhexadecylamine, N,N-dimethylheptadecylamine, and N,N-dimethyloctadecylamine. In addition to these, for example, a quaternary ammonium salt may also be used. The cationic polymerization inhibitor is particularly preferably a secondary amine.

The content in the curable liquid developer of the cationic polymerization inhibitor is preferably at least 1 ppm and not more than 5,000 ppm on a mass basis.

In addition to those described above, various known additives may be used on an optional basis in the curable liquid developer with the goal of improving the compatibility with the recording media, the storage stability, the image storability, and other properties. For example, a surfactant, lubricant, filler, antifoaming agent, ultraviolet absorber, antioxidant, anti-fading agent, fungicide and anticorrosion agent can as necessary be selected as appropriate and used.

There are no particular limitations on the method for producing the curable liquid developer, and, for example, a known method can be used, e.g., a coacervation method and wet pulverization method.

In an example of a general production method, the pigment, binder resin, toner particle dispersing agent, other additives, and a dispersion medium are mixed and milled using, for example, a bead mill, to obtain a toner particle dispersion. The obtained toner particle dispersion is mixed with the photopolymerization initiator, cationically polymerizable monomer, and so forth to obtain the curable liquid developer.

The details of the coacervation method are described in, for example, Japanese Patent Application Laid-open No. 2003-241439, WO 2007/000974, and WO 2007/000975.

In the coacervation method, the pigment, binder resin, toner particle dispersing agent, a solvent that dissolves the binder resin, and a solvent that does not dissolve the binder resin are mixed, and the solvent that dissolves the

binder resin is then removed from the mixture to cause the binder resin that had been dissolved to precipitate, thereby creating a dispersion of pigment-enclosing toner particles in the solvent that does not dissolve the binder resin.

The details of the wet pulverization method, on the other hand, are described in, for example, WO 2006/126566 and WO 2007/108485.

In the wet pulverization method, the pigment and binder resin are kneaded at or above the melting point of the binder resin; this is followed by a dry pulverization; and the obtained pulverized material is subjected to a wet pulverization in an electrically insulating medium, thereby creating a dispersion of toner particles in the electrically insulating medium.

Known methods such as these can be used in the present invention.

In a method for producing the curable liquid developer according to the present invention, the curable liquid developer containing a cationically polymerizable liquid monomer, a toner particle dispersing agent, and toner particles that contain a pigment and a binder resin, is produced by a method including

(i) preparing a pigment-dispersed solution containing the pigment, the binder resin, the toner particle dispersing agent, and a solvent that dissolves the binder resin;
(ii) preparing a liquid mixture containing the pigment-dispersed solution and a cationically polymerizable liquid monomer; and
(iii) distillatively removing the solvent from the liquid mixture.

Any solvent that dissolves the binder resin can be used as the solvent used in step (i) with no particular limitations.

The criterion for this solvent that dissolves the binder resin is that at least approximately 333 mass parts of the binder resin dissolves in 100 mass parts of the solvent at a temperature of 25°C.

Examples here are ethers such as tetrahydrofuran, ketones such as methyl ethyl ketone and cyclohexanone, esters such as ethyl acetate, and halides such as chloroform. This may also be an aromatic hydrocarbon, e.g., toluene and benzene that is capable of dissolving the binder resin.

A liquid mixture of the aforementioned pigment-dispersed solution and cationically polymerizable liquid monomer that does not dissolve the binder resin is prepared in the aforementioned step (ii); however, a solvent that does not dissolve the binder resin other than the cationically polymerizable liquid monomer may be used in place of the cationically polymerizable liquid monomer.

A hydrocarbon organic solvent, e.g., n-hexane and an isoparaffinic solvent, or a silicone oil can be favorably used as the aforementioned solvent that does not dissolve the binder resin.

Here, the solvent that does not dissolve the binder resin refers to the criterion that not more than 1 mass part of the binder resin dissolves in 100 mass parts of the solvent at a temperature of 25°C.

When toner particle production is carried out using a solvent that does not dissolve the binder resin, after the toner particles have been produced, the liquid developer can then be prepared by a method in which the cationically polymerizable liquid monomer is added or by a method in which this solvent is replaced by the cationically polymerizable liquid monomer.

That is, in a method for producing the curable liquid developer, the curable liquid developer containing a cationically polymerizable liquid monomer, a toner particle dispersing agent, and toner particles that contain a pigment and a binder resin, is produced by a method including

(I) preparing a pigment-dispersed solution containing a pigment, a binder resin, a toner particle dispersing agent, and a solvent that dissolves the binder resin;
(II) preparing a first liquid mixture containing the pigment-dispersed solution and a solvent that does not dissolve the binder resin other than the cationically polymerizable liquid monomer;
(III) preparing a toner particle dispersion by distillatively removing the solvent that dissolves the binder resin from the first liquid mixture; and
(IV) preparing a second mixture containing the toner particle dispersion and the cationically polymerizable liquid monomer.

Viewed from the standpoint of obtaining a high-definition image, the 50% particle diameter on a volume basis (D50) of the toner particle is preferably at least 0.1 μm and not more than 5.0 μm and is more preferably at least 0.1 μm and not more than 2.0 μm.

The toner particle concentration in the curable liquid developer is not particularly limited, but is suitably approximately at least 1 mass% and not more than 70 mass% and is preferably approximately at least 1 mass% and not more than 50 mass% and more preferably approximately at least 2 mass% and not more than 40 mass%.

Considered from the standpoint of not causing a decline in the potential of the electrostatic latent image, the volume resistivity of the curable liquid developer is preferably at least $1 \times 10^9\ \Omega \cdot cm$ and not more than $1 \times 10^{15}\ \Omega \cdot cm$ and is more preferably at least $1 \times 10^{10}\ \Omega \cdot cm$ and not more than $1 \times 10^{13}\ \Omega \cdot cm$.

The curable liquid developer can be advantageously used in common image-forming apparatuses that employ an electrophotographic system.

The application of the curable liquid developer to an electrophotographic image-forming apparatus that is a liquid image-forming apparatus (referred to in the following simply as the image-forming apparatus) is described in the following as an exemplary embodiment.

FIG. 1 is a schematic structural diagram of the main unit of the image-forming apparatus according to the present embodiment.

The image-forming apparatus is constituted of image-forming units 50C, 50M, 50Y, 50K; primary transfer units 60C, 60M, 60Y, 60K; a secondary transfer unit 30; and a developer curing unit 90.

The image-forming units 50C, 50M, 50Y, 50K respectively function to develop a latent image with a cyan (C) liquid developer, a magenta (M) liquid developer, a yellow (Y) liquid developer, and a black (K) liquid developer.

The image-forming units 50C, 50M, 50Y, 50K have structures comprising a photosensitive member 52C, 52M, 52Y, 52K and a developer supply pump 13C, 13M, 13Y, 13K-which supplies a developing unit 51C, 51M, 51Y, 51K with the respective liquid developer from a developer container 10C, 10M, 10Y, 10K that stores the particular liquid developer-wherein a charging device, a photoexposure device, a cleaning unit, and a static eliminator are disposed around these photosensitive members.

The image-forming units 50C, 50M, 50Y, 50K all have the same structure, and the following description therefore continues with reference to the image-forming unit 50C.

FIG. 2 gives a cross-sectional view of the image-forming unit 50C. A charging unit 57C, a photoexposure unit 56C, a developing unit 51C, a primary transfer unit 60C (FIG. 1), a recovery blade 59C, and a static-eliminating unit 58C are disposed along the direction of rotation of the photosensitive member 52C. The photosensitive member 52C has a cylindrical substrate and a photosensitive layer formed on the outer periphery thereof; is rotatably centered on a central axis; and in the present embodiment undergoes counterclockwise rotation. The surface of the photosensitive member 52C is formed of amorphous silicon (a-Si). For example, an organic photoconductor (OPC) and so forth can also be used for the material of the photosensitive member.

The charging unit 57C is an apparatus for charging the photosensitive member 52C. A corotron charging device or a roller charging device can be used.

The photoexposure unit 56C has a semiconductor laser, a polygon mirror, an F-θ lens, and so forth, and forms a latent image by irradiating a modulated laser onto the charged photosensitive member 52C. A light-emitting diode (LED) or organic light-emitting diode (OLED) can also be disposed as the laser light source.

The static-eliminating unit 58C is a device for neutralizing the photosensitive member 52C. A corona discharge-type charging device or a roller contact-type charging device can be used.

The recovery blade 59C is constituted of a rubber part of, e.g., a urethane rubber, which contacts the surface of the photosensitive member 52C, and a plate of, e.g., a metal, which supports the rubber part, and removes the liquid developer remaining on the photosensitive member 52C by scraping it into a recovery unit 12C.

The developing unit 51C is constituted of a development roller 53C, a concentration roller 54C, a cleaning roller 55C, and a film-production counterelectrode 11C.

The development roller 53C is a cylindrical member and rotates centered on a central axis in the opposite direction from the photosensitive member 52C as shown in FIG. 2. The development roller 53C is provided with an elastic member, e.g., a conductive urethane rubber, and a resin layer or rubber layer on the outer circumference of an inner core of a metal such as, e.g., iron.

The film-production counterelectrode 11C is disposed with a gap of at least 100 μm or more with the development roller 53C and is constituted of a metal member.

The concentration roller 54C is a cylindrical member and rotates centered on a central axis in the opposite direction from the development roller 53C as shown in FIG. 2. The concentration roller 54C is formed of a metal such as, e.g., iron.

The cleaning roller 55C is a cylindrical member and rotates centered on a central axis in the opposite direction from the development roller 53C as shown in FIG. 2.

The developer container 10C stores a cyan liquid developer for developing the latent image formed on the photosensitive member 52C. The concentration-adjusted liquid developer is fed from the developer container 10C, through a connection conduit in which the developer supply pump 13C is disposed, to the developing unit 51C, while the residual developer is returned to the developer container 10C through a connection conduit in which a developer recovery pump 14C is disposed. The toner particle concentration in the liquid developer in the developer container 10C is adjusted to, for example, approximately at least 2 mass%.

The liquid developer having an adjusted toner particle concentration is fed to between the rotating development roller 53C and the film-production counterelectrode 11C, and the liquid developer is coated on the development roller 53C by establishing a bias between the development roller 53C and the film-production counterelectrode 11C. The bias is made at least 100 V or more, and a bias up to the discharge limit can be established.

The residual fraction of the supplied liquid developer is recovered from a recovery unit 12C through a connection conduit that incorporates a recovery pump and is supplied to a recovery tank (not shown) and is re-used.

The primary transfer unit 60C, 60M, 60Y, 60K is constructed of an intermediate transfer belt 40, a primary transfer roller 61C, 61M, 61Y, 61K, and the photosensitive member 52C, 52M, 52Y, and 52K. The intermediate transfer belt 40 is an endless belt tensioned by a belt driver roller and a driven roller and is driven rotationally while in contact with the photosensitive members 52C, 52M, 52Y, 52K.

A full-color image is formed by the successive transfer of the four liquid developer colors onto the intermediate transfer belt 40 by the primary transfer units 60C, 60M, 60Y, 60K constituted of the intermediate transfer belt 40, the primary transfer rollers 61C, 61M, 61Y, 61K, and the photosensitive members 52C, 52M, 52Y, and 52K.

A secondary transfer unit 30 is constituted of a belt driver roller, a secondary transfer roller 31, a pre-wet roller 20, and a pre-wet counter-roller 21, and transfers, onto the recording medium 80, e.g., paper, a single-color liquid developer image or full-color liquid developer image formed on the intermediate transfer belt 40.

The pre-wet roller 20 is a cylindrical member and rotates centered on a central axis in the opposite direction from the intermediate transfer belt 40 as shown in FIG. 1.

After transport from a carrier tank (not shown) to the pre-wet roller 20 and the formation of a carrier film of not more than 1.0 μm on the surface, the amount of the liquid film of the single-color liquid developer image or full-color liquid developer image is adjusted by causing the pre-wet roller 20 to contact the single-color liquid developer image or full-color liquid developer image formed on the intermediate transfer belt 40.

A developer curing unit 90 irradiates light, e.g., ultraviolet radiation, on the single-color liquid developer image or full-color liquid developer image transferred onto the recording medium 80, causing the reactive functional groups to react and thereby effecting curing. The curing unit is constructed of an LED lamp, but there is no limitation to an LED as long as the device can irradiate ultraviolet radiation, and a heating apparatus, an EB-irradiating apparatus, and so forth can also be used.

The image is fixed by curing the curable liquid developer through application of energy thereto immediately after transfer to a recording medium.

The energy source used is not particularly limited, but ultraviolet radiation is favorably used.

For example, a mercury lamp, metal halide lamp, excimer laser, ultraviolet laser, cold cathode tube, hot cathode tube, black light, or light-emitting diode (LED) may be used as the light source here for carrying out ultraviolet irradiation. Among these, a strip-shaped metal halide lamp, cold cathode tube, hot cathode tube, mercury lamp, black light, or LED is preferred. The ultraviolet dose is preferably approximately 0.1 to 1,000 mJ/$cm^2$.

The measurement methods used in the present invention are given in the following.

Method for Analyzing the Polyester Resin Constituting the Toner Particle

Toner particle separation from the liquid developer is carried out by centrifugal separation and washing.

Specifically, 50 mL of the liquid developer is introduced into a centrifuge tube and a centrifugal separation process is carried out using a centrifugal separator (Allegra 64R Centrifuge, Beckman Coulter, Inc.) and conditions of 15,000 rpm and 10 minutes.

Toner particle sedimentation is confirmed and the supernatant is removed by decantation and an amount of hexane equal to the removed supernatant is added. Thorough washing with the hexane is carried out by stirring for 5 minutes with a spatula, followed by carrying out the centrifugal separation process under the same conditions. Hexane addition and removal is performed three times followed by evaporation of the hexane at room temperature to obtain toner particles.

The obtained toner particles are dissolved in deuterochloroform and compositional analysis of the polyester resin constituting the toner particle is carried out using a JNM-ECA ($^1$H-NMR), a Fourier-transform nuclear magnetic resonance instrument from JEOL Ltd.

Method for Measuring the Molecular Weight Distribution of, For Example, the Binder Resin

The molecular weight distribution of, e.g., the binder resin, is determined as polystyrene using gel permeation chromatography (GPC). Measurement of the molecular weight by GPC is carried out as follows.

A solution is prepared by adding the sample to the eluent indicated below to provide a sample concentration of 1.0 mass% and dissolving by standing for 24 hours at room temperature. This solution is filtered across a solvent-resistant membrane filter with a pore diameter of 0.20 μm to obtain the sample solution, and measurement is performed under the following conditions.

Instrument: "HLC-8220GPC" high-performance GPC instrument [Tosoh Corporation]
Column: 2 × LF-804

Eluent: tetrahydrofuran (THF)
Flow rate: 1.0 mL/min
Oven temperature: 40°C
Sample injection amount: 0.025 mL

The molecular weight calibration curve constructed using polystyrene resin standards [TSK Standard Polystyrene F-850, F-450, F-288, F-128, F-80, F-40, F-20, F-10, F-4, F-2, F-1, A-5000, A-2500, A-1000, and A-500, Tosoh Corporation] is used to determine the molecular weight of the sample.

Method for Measuring the Acid Value

The basic procedure for measuring the acid value is based on JIS K 0070.
The determination is specifically carried out using the following procedure.

1) 0.5 to 2.0 g of the sample is exactly weighed out. This mass is designated M1 (g).
2) The sample is introduced into a 50-mL beaker and is dissolved by the addition of 25 mL of a tetrahydrofuran/ethanol (2/1) mixture.
3) Using an ethanol solution of 0.1 mol/L KOH, titration is performed using a potentiometric titration apparatus ["COM-2500" automatic titration apparatus, Hiranuma Sangyo Co., Ltd.].
4) The amount of KOH solution used here is designated S1 (mL). The blank is measured at the same time, and the amount of KOH solution used in this case is designated B1 (mL).
5) The acid value is calculated using the following formula, f is the factor for the KOH solution.

$$\text{acid value [mg KOH/g]} = (S1\text{-}B1) \times f \times 5.61/M1$$

Method for Measuring the Amine Value

The basic procedure for measuring the amine value is based on ASTM D 2074.
The determination is specifically carried out using the following procedure.

1) 0.5 to 2.0 g of the sample is exactly weighed out. This mass is designated M2 (g).
2) The sample is introduced into a 50-mL beaker and is dissolved by the addition of 25 mL of a tetrahydrofuran/ethanol (3/1) mixture.
3) Using an ethanol solution of 0.1 mol/L HCl, titration is performed using a potentiometric titratation apparatus ["COM-2500" automatic titration apparatus, Hiranuma Sangyo Co., Ltd.].
4) The amount of HCl solution used here is designated S2 (mL). The blank is measured at the same time, and the amount of HCl solution used in this case is designated B2 (mL).
5) The amine value is calculated using the following formula. f is the factor for the HCl solution.

$$\text{amine value [mg KOH/g]} = (S2\text{-}B2) \times f \times 5.61/M2$$

Method for Measuring the Volume Resistivity

The volume resistivity is measured using an R8340A digital ultrahigh resistance/microcurrent meter (ADC Corporation). For the measurement, 25 mL of the sample is introduced into an SME-8330 liquid sample electrode (Hioki E.E. Corporation) and the measurement is performed by the application of 1,000 V direct current at a room temperature of 25°C.

EXAMPLES

The present invention is described in detail using the following examples; however, the present invention is not limited to or by these examples. Unless specifically indicated otherwise, "parts" and "%" respectively indicate "mass parts" and "mass%".

Curable Liquid Developer 1 Production Example (Coacervation Method)

Pigment-dispersed solution 1 Preparation Step

30 parts of Pigment Blue 15:3, 47 parts of Vylon UR4800 (32% resin concentration, Toyobo Co., Ltd.), 255 parts of tetrahydrofuran, and 130 parts of glass beads (diameter = 1 mm) were mixed; dispersion was performed for 3 hours using an attritor [Nippon Coke & Engineering Co., Ltd.]; and filtration on a mesh provided a kneaded material.

180 parts of the obtained kneaded material, 126 parts of a 50% tetrahydrofuran solution of a polyester resin 1 [polyester resin with ethylene glycol: neopentyl glycol : terephthalic acid : isophthalic acid (molar ratio) = 60 : 40 : 50 : 50, glass transition temperature (Tg): 62°C, softening temperature (Tm): 115°C, acid value: 15 mg KOH/g, weight-average molecular weight (Mw): $1.5 \times 10^4$], and 21 parts of toner particle dispersing agent 1 (Ajisper PB-817, Ajinomoto Fine-Techno Co., Inc.) were mixed with a high-speed disperser (T. K. Robomix/T. K. Homodisper Model 2.5 blade, Primix Corporation), and pigment-dispersed solution 1 was obtained by mixing while stirring at 40°C.

Mixing Step

A liquid mixture 1 was obtained by adding 100 parts of dodecyl vinyl ether (DDVE, exemplary compound B-3), which is a cationically polymerizable liquid monomer, a little at a time to 100 parts of the obtained pigment-dispersed solution 1 while performing high-speed stirring (rotation rate = 25,000 rpm) using a homogenizer (Ultra-Turrax T50, IKA®-Werke GmbH & Co. KG).

Distillative Removal Step

The resulting liquid mixture 1 was transferred to a recovery flask and the tetrahydrofuran was completely distillatively removed at 50°C while performing ultrasound dispersion to obtain a toner particle dispersion 1.

Curable Liquid Developer Preparation Step

10 parts of the obtained toner particle dispersion 1 was subjected to a centrifugal separation treatment; the supernatant was removed by decantation; and redispersion was carried out by replacement with fresh dodecyl vinyl ether (DDVE) in the same amount as the supernatant that had been removed.

This was followed by the admixture of 0.10 parts of hydrogenated lecithin (Lecinol S-10, Nikko Chemicals Co., Ltd.) as charge control agent, 80.00 parts of exemplary compound B-26 (DEPDVE) as cationically polymerizable liquid monomer, 0.30 parts of exemplary compound A-26 as photopolymerization initiator, 0.50 parts of 2,4-diethylthioxanthone as sensitizer, and 0.50 parts of 1,4-diethoxynaphthalene as auxiliary sensitizer to obtain a curable liquid developer 1.

Curable Liquid Developer 1-2 Production Example

A curable liquid developer 1-2 was obtained proceeding as in the Curable Liquid Developer 1 Production Example, but changing-as the cationically polymerizable liquid monomer added at 80.00 parts in the Curable Liquid Developer Preparation Step-the exemplary compound B-26 (DEPDVE) to exemplary compound B-27 (2-butyl-2-ethyl-1,3-propanediol divinyl ether).

Curable Liquid Developer 1-3 Production Example

A curable liquid developer 1-3 was obtained proceeding as in the Curable Liquid Developer 1 Production Example, but changing-as the cationically polymerizable liquid monomer added at 80.00 parts in the Curable Liquid Developer Preparation Step-the exemplary compound B-26 (DEPDVE) to exemplary compound B-31 (1,12-octadecanediol divinyl ether).

Curable Liquid Developer 2 Production Example

A curable liquid developer 2 was obtained proceeding as in the Curable Liquid Developer 1 Production Example, but changing the photopolymerization initiator (exemplary compound A-26) to exemplary compound A-11.

Curable Liquid Developer 3 Production Example

A curable liquid developer 3 was obtained proceeding as in the Curable Liquid Developer 1 Production Example,

but changing the photopolymerization initiator (exemplary compound A-26) to exemplary compound A-28.

Curable Liquid Developer 4 Production Example

A curable liquid developer 4 was obtained proceeding as in the Curable Liquid Developer 1 Production Example, but changing the polyester resin 1 to a polyester resin 2 [polyester resin with ethylene glycol: neopentyl glycol: terephthalic acid : isophthalic acid (molar ratio) = 60 : 40 : 65 : 35, Tg: 59°C, Tm: 105°C, acid value: 12 mg KOH/g, Mw: $1.3 \times 10^4$].

Curable Liquid Developer 5 Production Example

A curable liquid developer 5 was obtained proceeding as in the Curable Liquid Developer 1 Production Example, but changing the polyester resin 1 to a polyester resin 3 [polyester resin with ethylene glycol : neopentyl glycol: terephthalic acid : isophthalic acid (molar ratio) = 60 : 40 : 30 : 70, Tg: 69°C, Tm: 115°C, acid value: 11 mg KOH/g, Mw: $2.2 \times 10^4$].

Curable Liquid Developer 6 Production Example

A curable liquid developer 6 was obtained proceeding as in the Curable Liquid Developer 1 Production Example, but changing the polyester resin 1 to a polyester resin 4 [polyester resin with ethylene glycol: neopentyl glycol: terephthalic acid : isophthalic acid (molar ratio) = 35 : 65 : 50 : 50, Tg: 63°C, Tm: 111°C, acid value: 10 mg KOH/g, Mw: $1.8 \times 10^4$].

Curable Liquid Developer 7 Production Example

A curable liquid developer 7 was obtained proceeding as in the Curable Liquid Developer 1 Production Example, but changing the polyester resin 1 to a polyester resin 5 [polyester resin with polyoxyethylene(2.0)-2,2-bis(4-hydroxyphenyl)propane : ethylene glycol : neopentyl glycol: terephthalic acid : isophthalic acid (molar ratio) = 10 : 50 : 40 : 50 : 50, Tg: 61°C, Tm: 110°C, acid value: 18 mg KOH/g, Mw: $1.6 \times 10^4$].

Curable Liquid Developer 8 Production Example

A curable liquid developer 8 was obtained proceeding as in the Curable Liquid Developer 1 Production Example, but changing the polyester resin 1 to a polyester resin 6 [polyester resin with polyoxyethylene(2.0)-2,2-bis(4-hydroxyphenyl)propane : ethylene glycol : neopentyl glycol: terephthalic acid : isophthalic acid (molar ratio) = 20 : 40 : 40 : 50 : 50, Tg: 58°C, Tm: 95°C, acid value: 9 mg KOH/g, Mw: $1.0 \times 10^4$].

Curable Liquid Developer 9 Production Example

A curable liquid developer 9 was obtained proceeding as in the Curable Liquid Developer 1 Production Example, but changing the polyester resin 1 to a polyester resin 7 [polyester resin with polyoxyethylene(2.0)-2,2-bis(4-hydroxyphenyl)propane : ethylene glycol : neopentyl glycol: terephthalic acid : isophthalic acid (molar ratio) = 40 : 30 : 30 : 50 : 50, Tg: 61°C, Tm: 101°C, acid value: 11 mg KOH/g, Mw: $1.6 \times 10^4$].

Curable Liquid Developer 10 Production Example

A curable liquid developer 10 was obtained proceeding as in the Curable Liquid Developer 1 Production Example, but changing the polyester resin 1 to a polyester resin 8 [polyester resin with polyoxyethylene(2.0)-2,2-bis(4-hydroxyphenyl)propane : ethylene glycol : neopentyl glycol: terephthalic acid : isophthalic acid : trimellitic anhydride (molar ratio) = 40 : 30 : 30 : 45 : 50 : 5, Tg: 61°C, Tm: 101°C, acid value: 13 mg KOH/g, Mw: $1.6 \times 10^4$].

Curable Liquid Developer 11 Production Example

A curable liquid developer 11 was obtained proceeding as in the Curable Liquid Developer 1 Production Example, but changing the polyester resin 1 to a polyester resin 9 [polyester resin with polyoxyethylene(2.0)-2,2-bis(4-hydroxyphenyl)propane : polyoxypropylene(2.0)-2,2-bis(4-hydroxyphenyl)propane : ethylene glycol : neopentyl glycol: terephthalic acid : isophthalic acid : trimellitic anhydride (molar ratio) = 30 : 10 : 30 : 30 : 45 : 50 : 5, Tg: 55°C, Tm: 98°C, acid value: 6 mg KOH/g, Mw: $1.1 \times 10^4$].

Curable Liquid Developer 12 Production Example

A curable liquid developer 12 was obtained proceeding as in the Curable Liquid Developer 1 Production Example, but changing the polyester resin 1 to a polyester resin 10 [polyester resin with hexanediol : polyoxyethylene(2.0)-2,2-bis(4-hydroxyphenyl)propane : ethylene glycol: neopentyl glycol : terephthalic acid : isophthalic acid : trimellitic anhydride (molar ratio) = 20 : 40 : 20 : 20 : 45 : 50 : 5, Tg: 60°C, Tm: 110°C, acid value: 11 mg KOH/g, Mw: $1.6 \times 10^4$].

Curable Liquid Developer 13 Production Example

A curable liquid developer 13 was obtained proceeding as in the Curable Liquid Developer 1 Production Example, but changing the polyester resin 1 to a polyester resin 11 [polyester resin with hexanediol : polyoxyethylene(2.0)-2,2-bis(4-hydroxyphenyl)propane : ethylene glycol: neopentyl glycol : terephthalic acid : isophthalic acid : trimellitic anhydride : adipic acid (molar ratio) = 20 : 40 : 20 : 20 : 35 : 40 : 5 : 20, Tg: 51°C, Tm: 98°C, acid value: 5 mg KOH/g, Mw: $1.2 \times 10^4$].

Curable Liquid Developer 14 Production Example

A curable liquid developer 14 was obtained proceeding as in the Curable Liquid Developer 13 Production Example, but changing the cationically polymerizable liquid monomer (exemplary compound B-26) to OTX-221 (3-ethyl-3-{[(3-ethyloxetan-3-yl)methoxy]methyl}oxetane, Toagosei Co., Ltd.).

Curable Liquid Developer 15 Production Example (Wet Pulverization Method)

- Polyester resin 1 63 parts
- Pigment (Pigment Blue 15:3) 9 parts
- Pigment dispersing agent with solvent removed 18 parts

(Vylon UR4800: Toyobo Co., Ltd.)

These materials were thoroughly mixed using a Henschel mixer, followed by melt-kneading using a corotating twin-screw extruder with a heating temperature within the roll of 100°C, to obtain a kneaded material.

The obtained kneaded material was cooled and coarsely pulverized to obtain coarsely pulverized toner particles.

- Dodecyl vinyl ether (DDVE, exemplary compound B-3) 80 parts
- Coarsely pulverized toner particles 20 parts
- Toner particle dispersing agent 4.5 parts

(Ajisper PB-817, Ajinomoto Fine-Techno Co., Inc.)

These materials were then mixed for 24 hours using a sand mill to obtain a toner particle dispersion 15.

10 parts of the obtained toner particle dispersion 15 was subjected to a centrifugal separation treatment; the supernatant was removed by decantation; and redispersion was carried out by replacement with fresh dodecyl vinyl ether (DDVE) in the same amount as the supernatant that had been removed.

This was followed by the admixture of 0.10 parts of hydrogenated lecithin (Lecinol S-10, Nikko Chemicals Co., Ltd.) as charge control agent, 80.00 parts of exemplary compound B-26 (DEPDVE) as cationically polymerizable liquid monomer, 0.30 parts of exemplary compound A-26 as photopolymerization initiator, 0.50 parts of 2,4-diethylthioxanthone as sensitizer, and 0.50 parts of 1,4-diethoxynaphthalene as auxiliary sensitizer to obtain a curable liquid developer 15.

Curable Liquid Developer 15-2 Production Example

A curable liquid developer 15-2 was obtained proceeding as in the Curable Liquid Developer 15 Production Example, but changing the exemplary compound B-3 (DDVE)-which was added at 80.00 parts to the coarsely pulverized toner particles-to exemplary compound B-27 (2-butyl-2-ethyl-1,3-propanediol divinyl ether).

Curable Liquid Developer 15-3 Production Example

A curable liquid developer 15-3 was obtained proceeding as in the Curable Liquid Developer 15 Production Example, but changing the exemplary compound B-3 (DDVE)-which was added at 80.00 parts to the coarsely pulverized toner particles-to exemplary compound B-31 (1,12-octadecanediol divinyl ether).

Curable Liquid Developers 16 to 25 Production Example

Curable liquid developers 16 to 25 were obtained proceeding as in the Curable Liquid Developer 15 Production Example, but changing the polyester resin 1 to polyester resins 2 to 11, respectively.

Curable Liquid Developer 26 Production Example

A curable liquid developer 26 was obtained proceeding as in the Curable Liquid Developer 1 Production Example, but changing the polyester resin 1 to a polyester resin 12 [polyester resin with polyoxyethylene(2.0)-2,2-bis(4-hydroxyphenyl)propane : terephthalic acid : trimellitic anhydride (molar ratio) = 100 : 85 : 15, Tg: 60°C, Tm: 110°C, acid value: 11 mg KOH/g, Mw: $1.6 \times 10^4$].

Curable Liquid Developer 27 Production Example

A curable liquid developer 27 was obtained proceeding as in the Curable Liquid Developer 1 Production Example, but changing the polyester resin 1 to a polyester resin 13 [polyester resin with hexanediol : polyoxyethylene(2.0)-2,2-bis(4-hydroxyphenyl)propane : ethylene glycol: neopentyl glycol : terephthalic acid : isophthalic acid : trimellitic anhydride : adipic acid (molar ratio) = 20 : 40 : 20 : 20 : 35 : 40 : 5 : 20, Tg: 53°C, Tm: 98°C, acid value: 2 mg KOH/g, Mw: $1.3 \times 10^4$].

Curable Liquid Developer 28 Production Example

A curable liquid developer 28 was obtained proceeding as in the Curable Liquid Developer 15 Production Example, but changing polyester resin 1 to polyester resin 12.

Curable Liquid Developer 29 Production Example

A curable liquid developer 29 was obtained proceeding as in the Curable Liquid Developer 15 Production Example, but changing the polyester resin 1 to polyester resin 13.

Polyester resins 1 to 13 are listed in Table 1.

[Table 1]

| Polyester resin No. | Acid component | | | | Alcohol component | | | | | Acid value mgKOH/g |
|---|---|---|---|---|---|---|---|---|---|---|
| | TPA | IPA | TMA | AA | NPG | EG | HG | BPA-EO | BPA-PO | |
| 1 | 50 | 50 | 0 | 0 | 40 | 60 | 0 | 0 | 0 | 15 |
| 2 | 65 | 35 | 0 | 0 | 40 | 60 | 0 | 0 | 0 | 12 |
| 3 | 30 | 70 | 0 | 0 | 40 | 60 | 0 | 0 | 0 | 11 |
| 4 | 50 | 50 | 0 | 0 | 65 | 35 | 0 | 0 | 0 | 10 |
| 5 | 50 | 50 | 0 | 0 | 40 | 50 | 0 | 10 | 0 | 18 |
| 6 | 50 | 50 | 0 | 0 | 40 | 40 | 0 | 20 | 0 | 9 |
| 7 | 50 | 50 | 0 | 0 | 30 | 30 | 0 | 40 | 0 | 11 |
| 8 | 45 | 50 | 5 | 0 | 30 | 30 | 0 | 40 | 0 | 13 |
| 9 | 45 | 50 | 5 | 0 | 30 | 30 | 0 | 30 | 10 | 6 |

(continued)

| Polyester resin No. | Acid component | | | | Alcohol component | | | | | Acid value mgKOH/g |
|---|---|---|---|---|---|---|---|---|---|---|
| | TPA | IPA | TMA | AA | NPG | EG | HG | BPA-EO | BPA-PO | |
| 10 | 45 | 50 | 5 | 0 | 20 | 20 | 20 | 40 | 0 | 11 |
| 11 | 35 | 40 | 5 | 20 | 20 | 20 | 20 | 40 | 0 | 5 |
| 12 | 85 | 0 | 15 | 0 | 0 | 0 | 0 | 100 | 0 | 11 |
| 13 | 35 | 40 | 5 | 20 | 20 | 20 | 20 | 40 | 0 | ≦ 2 |

The abbreviations used in Table 1 represent the following.

TPA: terephthalic acid

IPA: isophthalic acid

TMA: trimellitic anhydride

AA: adipic acid

NPG: neopentyl glycol

EG: ethylene glycol

HG: hexanediol

BPA-EO: polyoxyethylene(2.0)-2,2-bis(4-hydroxyphenyl)propane

BPA-PO: polyoxypropylene(2.0)-2,2-bis(4-hydroxyphenyl)propane

Examples 1 to 25 and Comparative Examples 1 to 4

Curable liquid developers 1 to 29 were evaluated using the following evaluation methods. The results are given in Table 2.

Evaluation of Image Quality

Using the image-forming apparatus shown in FIGS. 1 and 2 and the obtained curable liquid developer, an image was formed on a polyethylene terephthalate (PET) sheet and the quality of the obtained image was inspected.
The specific procedure is as follows.

(1) The development roller 53, photosensitive member 52, and primary transfer roller 61 were separated from each other and these were driven in a noncontact condition at different rotations in the directions of the arrows in FIG. 1. The rotation rate at this time was 250 mm/sec.
(2) The development roller 53 and the photosensitive member 52 were brought into contact at a pressing pressure of 5 N/cm and a bias was established using a DC power source. Since the developing bias is desirably in the range from 100 to 400 V, 200 V was used.
(3) The photosensitive member 52 and the primary transfer roller 61 were brought into contact at a prescribed pressing pressure and a bias was established using a DC power source. The transfer bias was made 1,000 V.
(4) The secondary transfer unit 30 and the secondary transfer roller 31 were brought into contact at a prescribed pressing pressure and a bias was established using a DC power source. The transfer bias was made 1,000 V.
(5) The curable liquid developer was supplied to the developer container 10C; using a recording medium 80 provided by adhering a polyethylene terephthalate (PET) sheet (Teijin Chemicals Limited, Panlite: PC-2151, thickness = 0.3 mm) to a portion of OK Topcoat (Oji Paper Co., Ltd.), a full page-printed solid image was formed on the PET sheet; and evaluation was then carried out. The image quality was visually inspected.

Evaluation Criteria

5: image density non-uniformity and image blurring were not observed and an excellent image was obtained
4: some image density non-uniformity, or some image blurring, was observed, but a generally excellent image was obtained
3: an image was obtained in which image density non-uniformity within a permissible range was seen, or in which some image blurring was seen
2: image density non-uniformity and/or image blurring was produced, locations of unsatisfactory development were observed
1: severe image density non-uniformity and/or image blurring was produced, locations of unsatisfactory development were observed, and cleaning of the interior of the apparatus was required

Evaluation of the Dispersion Stability

The curable liquid developer was stored for 1 month at 40°C.
Both before and after storage, the toner particle diameter was measured as the number-average particle diameter using a Microtrac HRA (X-100) particle size distribution analyzer (Nikkiso Co., Ltd.) at a range setting of 0.001 μm to 10 μm.
The toner particle dispersion stability was evaluated in terms of the ratio of the toner particle diameter post-versus-pre-storage (toner particle diameter post-storage/toner particle diameter pre-storage).
The evaluation criteria for the dispersion stability are given below. A score of 3 or higher was regarded as excellent in this evaluation.

5: (toner particle diameter ratio post-versus-pre-storage) ≤ 1.1
4: 1.1 < (toner particle diameter ratio post-versus-pre-storage) ≤ 1.2
3: 1.2 < (toner particle diameter ratio post-versus-pre-storage) ≤ 1.5
2: 1.5 < (toner particle diameter ratio post-versus-pre-storage) ≤ 2.0
1: 2.0 < (toner particle diameter ratio post-versus-pre-storage)

Evaluation of the Stability of the Electrical Resistance

The curable liquid developer was stored for 1 week at 50°C.
The volume resistivity of the curable liquid developer was measured both pre- and post-storage using an R8340A digital ultrahigh resistance/microcurrent meter (ADC Corporation).
Using the reciprocal value as the electrical conductivity, the evaluation was performed using $\Delta\alpha$ = (electrical conductivity [1/Ω·cm] after storage for 1 week) - (initial electrical conductivity [1/Ω·cm]).
A smaller $\Delta\alpha$ is indicative of a greater stability for the electrical resistance. The evaluation criteria for the electrical resistance stability are given below. A score of 3 or higher was regarded as excellent in this evaluation.

5: $\Delta\alpha \leq 5.0 \times 10^{-12}$
4: $5.0 \times 10^{-12} < \Delta\alpha \leq 1.0 \times 10^{-11}$
3: $1.0 \times 10^{-11} < \Delta\alpha \leq 5.0 \times 10^{-11}$
2: $5.0 \times 10^{-11} < \Delta\alpha \leq 1.0 \times 10^{-10}$
1: $1.0 \times 10^{-10} < \Delta\alpha$

Evaluation of the Curability

The curable liquid developer was dripped onto a polyethylene terephthalate film (Teijin Chemicals Limited, Panlite: PC-2151, thickness = 0.3 mm) in an environment of 30% humidity and room temperature of 25°C; bar coating was performed using a wire bar (No. 6) [supplier: Matsuo Sangyo Co., Ltd.] (a film with a thickness of 8.0 μm was formed); and a cured film was formed by irradiation with light at a wavelength of 365 nm from a high-pressure mercury lamp having a lamp output of 120 mW/cm$^2$. A complete cure was obtained without any tack (stickiness) upon irradiation with a light dose of 600 mJ/cm$^2$.

[Table 2]

| | Curable liquid developer No. | Polyester resin No. | Photopolymerization initiator | Production method | Image quality | Dispersion stability | Electrical resistance stability |
|---|---|---|---|---|---|---|---|
| Example 1 | 1 | 1 | A-26 | 1 | 5 | 5 | 5 |
| Example 1-2 | 1-2 | 1 | A-26 | 1 | 5 | 5 | 5 |
| Example 1-3 | 1-3 | 1 | A-26 | 1 | 5 | 5 | 5 |
| Example 2 | 2 | 1 | A-11 | 1 | 5 | 5 | 5 |
| Example 3 | 3 | 1 | A-28 | 1 | 5 | 5 | 5 |
| Example 4 | 4 | 2 | A-26 | 1 | 5 | 5 | 5 |
| Example 5 | 5 | 3 | A-26 | 1 | 5 | 5 | 5 |
| Example 6 | 6 | 4 | A-26 | 1 | 5 | 5 | 5 |
| Example 7 | 7 | 5 | A-26 | 1 | 5 | 5 | 4 |
| Example 8 | 8 | 6 | A-26 | 1 | 5 | 5 | 3 |
| Example 9 | 9 | 7 | A-26 | 1 | 5 | 5 | 3 |
| Example 10 | 10 | 8 | A-26 | 1 | 5 | 4 | 3 |
| Example 11 | 11 | 9 | A-26 | 1 | 5 | 4 | 3 |
| Example 12 | 12 | 10 | A-26 | 1 | 5 | 3 | 3 |
| Example 13 | 13 | 11 | A-26 | 1 | 4 | 3 | 3 |
| Example 14 | 14 | 11 | A-26 | 1 | 3 | 3 | 3 |
| Example 15 | 15 | 1 | A-26 | 2 | 5 | 5 | 5 |
| Example 15-2 | 15-2 | 1 | A-26 | 2 | 5 | 5 | 5 |
| Example 15-3 | 15-3 | 1 | A-26 | 2 | 5 | 5 | 5 |
| Example 16 | 16 | 2 | A-26 | 2 | 5 | 5 | 5 |
| Example 17 | 17 | 3 | A-26 | 2 | 5 | 5 | 5 |
| Example 18 | 18 | 4 | A-26 | 2 | 5 | 5 | 5 |
| Example 19 | 19 | 5 | A-26 | 2 | 5 | 5 | 4 |
| Example 20 | 20 | 6 | A-26 | 2 | 5 | 5 | 3 |

(continued)

| | Curable liquid developer No. | Polyester resin No. | Photopolymerization initiator | Production method | Image quality | Dispersion stability | Electrical resistance stability |
|---|---|---|---|---|---|---|---|
| Example 21 | 21 | 7 | A-26 | 2 | 5 | 5 | 3 |
| Example 22 | 22 | 8 | A-26 | 2 | 5 | 4 | 3 |
| Example 23 | 23 | 9 | A-26 | 2 | 5 | 4 | 3 |
| Example 24 | 24 | 10 | A-26 | 2 | 4 | 3 | 3 |
| Example 25 | 25 | 11 | A-26 | 2 | 3 | 3 | 3 |
| Comparative Example 1 | 26 | 12 | A-26 | 1 | 5 | 4 | 2 |
| Comparative Example 2 | 27 | 13 | A-26 | 1 | 3 | 3 | 2 |
| Comparative Example 3 | 28 | 12 | A-26 | 2 | 5 | 4 | 2 |
| Comparative Exam ple 4 | 29 | 13 | A-26 | 2 | 3 | 3 | 2 |

According to the results in Table 2, the examples of the present invention were able to provide a better suppression of the timewise decline in electrical resistance than the prior art Comparative Examples 1 to 4, and were able to do so without a loss in the toner particle dispersion stability.

The present invention can thus provide a curable liquid developer with which, even with elapsed time, the toner particle dispersion stability is maintained and reductions in the volume resistivity are inhibited. The present invention can also provide a method for producing this curable liquid developer.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

A curable liquid developer containing: a toner particle containing a pigment and a binder resin; a toner particle dispersing agent; and a cationically polymerizable liquid monomer, wherein the binder resin contains a polyester resin having an acid value of at least 5 mg KOH/g; the polyester resin contains an alcohol component-derived monomer unit and an acid component-derived monomer unit; the alcohol component-derived monomer unit and the acid component-derived monomer unit contain specific monomer units in specific proportions; and the content of the polyester resin in the binder resin is at least 50 mass% and not more than 100 mass%.

## Claims

1. A curable liquid developer comprising: a toner particle having a pigment and a binder resin; a toner particle dispersing agent; and a cationically polymerizable liquid monomer, wherein
the binder resin contains a polyester resin having an acid value of at least 5 mg KOH/g;
the polyester resin contains an alcohol component-derived monomer unit and an acid component-derived monomer unit;
the alcohol component-derived monomer unit contains a monomer unit derived from an aliphatic diol having at least 2 and not more than 12 carbons;
in the alcohol component-derived monomer unit, the content of the monomer unit derived from the aliphatic diol having at least 2 and not more than 12 carbons is at least 50 mol% and not more than 100 mol%;
the acid component-derived monomer unit contains a monomer unit derived from an aromatic dicarboxylic acid having at least 8 and not more than 12 carbons;
in the acid component-derived monomer unit, the content of the monomer unit derived from the aromatic dicarboxylic acid having at least 8 and not more than 12 carbons is at least 75 mol% and not more than 100 mol%; and
in the binder resin, the content of the polyester resin is at least 50 mass% and not more than 100 mass%.

2. The curable liquid developer according to claim 1, wherein the cationically polymerizable liquid monomer contains a vinyl ether compound.

3. The curable liquid developer according to claim 1 or 2, wherein
the alcohol component-derived monomer unit contains a monomer unit derived from an aliphatic diol having at least 2 and not more than 5 carbons, and
in the alcohol component-derived monomer unit, the content of the monomer unit derived from the aliphatic diol having at least 2 and not more than 5 carbons is at least 50 mol% and not more than 100 mol%.

4. The curable liquid developer according to claim 3, wherein the content of the monomer unit derived from aliphatic diol having at least 2 and not more than 5 carbons in the alcohol component-derived monomer unit is at least 85 mol% and not more than 100 mol%.

5. The curable liquid developer according to any one of claims 1 to 4, wherein
the alcohol component-derived monomer unit contains at least one monomer unit selected from the group consisting of an ethylene glycol-derived monomer unit and a neopentyl glycol-derived monomer unit, and
in the alcohol component-derived monomer unit, the content of the at least one monomer unit selected from the group consisting of an ethylene glycol-derived monomer unit and a neopentyl glycol-derived monomer unit is at least 85 mol% and not more than 100 mol%.

6. The curable liquid developer according to any one of claims 1 to 5, wherein
the acid component-derived monomer unit contains at least one monomer unit selected from the group consisting of a terephthalic acid-derived monomer unit and an isophthalic acid-derived monomer unit, and
in the acid component-derived monomer unit, the content of the at least one monomer unit selected from the group

consisting of a terephthalic acid-derived monomer unit and an isophthalic acid-derived monomer unit is at least 85 mol% and not more than 100 mol%.

**7.** The curable liquid developer according to any one of claims 1 to 6, wherein
the alcohol component-derived monomer unit contains at least one monomer unit selected from the group consisting of an ethylene glycol-derived monomer unit and a neopentyl glycol-derived monomer unit, and
in the alcohol component-derived monomer unit, the content of the at least one monomer unit selected from the group consisting of an ethylene glycol-derived monomer unit and a neopentyl glycol-derived monomer unit is at least 95 mol% and not more than 100 mol%.

**8.** The curable liquid developer according to any one of claims 1 to 6, wherein
the alcohol component-derived monomer unit contains an aromatic diol-derived monomer unit;
in the alcohol component-derived monomer unit, the content of the aromatic diol-derived monomer unit is at least 0 mol% and less 15 mol%;
the acid component-derived monomer unit contains an aliphatic dicarboxylic acid-derived monomer unit; and
in the acid component-derived monomer unit, the content of the aliphatic dicarboxylic acid-derived monomer unit is at least 0 mol% and less than 15 mol%.

**9.** A method of producing a curable liquid developer, which produces the curable liquid developer according to any one of claims 1 to 8,
the curable liquid developer production method comprising:

preparing a pigment-dispersed solution containing a pigment, a binder resin, a toner particle dispersing agent, and a solvent dissolving the binder resin;
preparing a liquid mixture comprising the pigment-dispersed solution and a cationically polymerizable liquid monomer; and
distillatively removing the solvent from the liquid mixture.

**10.** A method of producing a curable liquid developer, which produces the curable liquid developer according to any one of claims 1 to 8,
the curable liquid developer production method comprising:

preparing a pigment-dispersed solution containing a pigment, a binder resin, a toner particle dispersing agent, and a first solvent dissolving the binder resin;
preparing a first liquid mixture containing the pigment-dispersed solution and a second solvent not dissolving the binder resin, the second solvent being other than cationically polymerizable liquid monomer;
preparing a toner particle dispersion by distillatively removing the first solvent dissolving the binder resin from the first liquid mixture; and
preparing a second liquid mixture containing the toner particle dispersion and a cationically polymerizable liquid monomer.

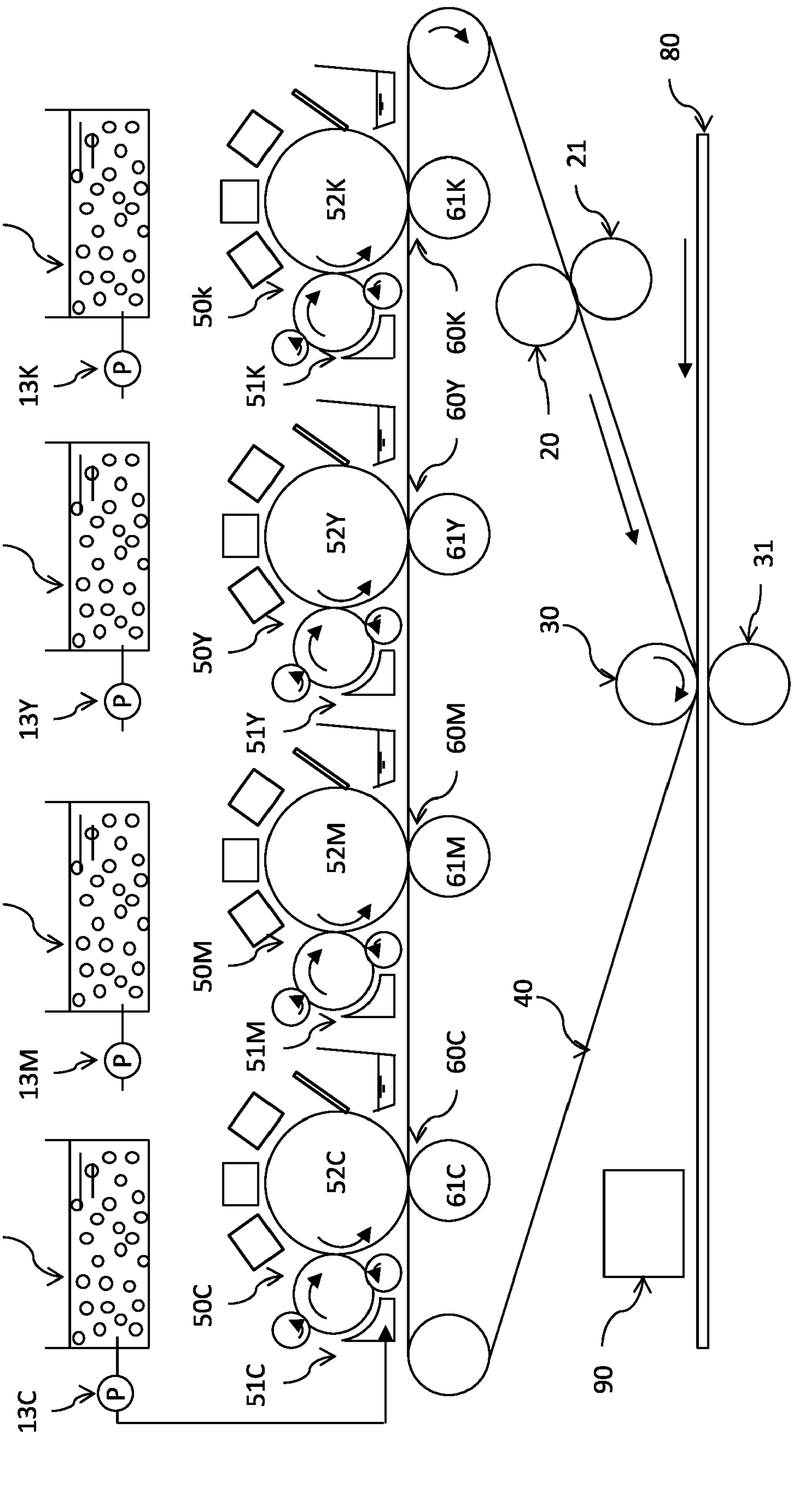
10K
10Y
10M
10C
13K
13Y
13M
13C
P
50k
50Y
50M
50C
51K
51Y
51M
51C
52K
52Y
52M
52C
60K
60Y
60M
60C
61K
61Y
61M
61C
80
21
20
30
31
40
90

FIG.1

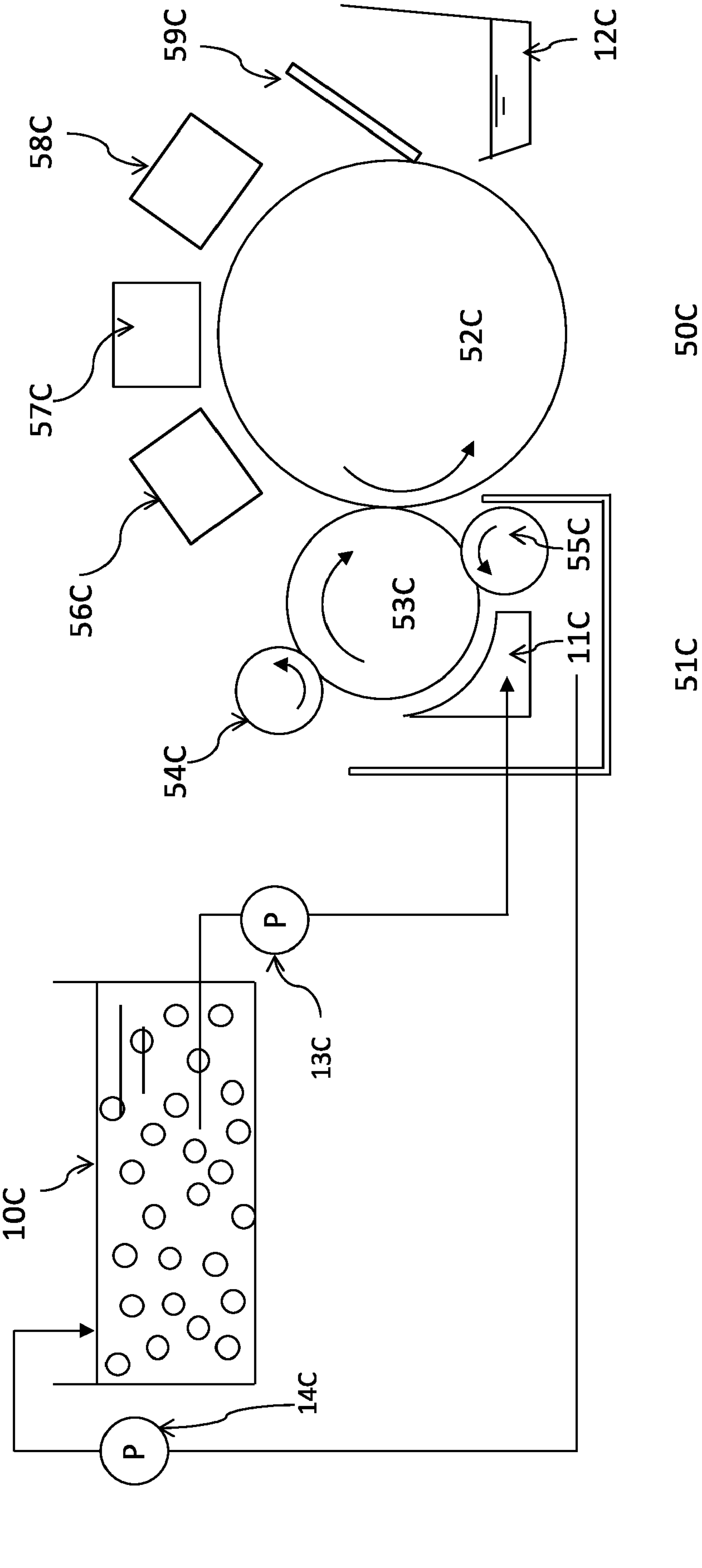


FIG.2

Europäisches Patentamt
European Patent Office
Office européen des brevets

# EUROPEAN SEARCH REPORT

Application Number
EP 18 17 4497

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 098 657 A1 (CANON KK [JP]) 30 November 2016 (2016-11-30) * paragraph [0045] - paragraph [0047] * * paragraph [0009] * * paragraph [0043] * * paragraph [0004] * * paragraph [0020] * * claims 1-6 * ----- | 1-10 | INV. G03G9/125 G03G9/13 |
| A | US 2016/349652 A1 (NATORI RYO [JP] ET AL) 1 December 2016 (2016-12-01) * paragraph [0068] - paragraph [0074] * * paragraph [0075] - paragraph [0083] * * paragraph [0094] - paragraph [0096] * * paragraph [0183] * * paragraph [0173] * * claims 1-8 * ----- | 1-10 | |

TECHNICAL FIELDS SEARCHED (IPC)
G03G

The present search report has been drawn up for all claims

1

| Place of search | Date of completion of the search | Examiner |
|---|---|---|
| The Hague | 20 September 2018 | Weiss, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 18 17 4497

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2018

| Patent document cited in search report | Publication date | Patent family member(s) | Publication date |
|---|---|---|---|
| EP 3098657 A1 | 30-11-2016 | EP 3098657 A1 | 30-11-2016 |
| | | JP 2016224098 A | 28-12-2016 |
| | | US 2016349656 A1 | 01-12-2016 |
| US 2016349652 A1 | 01-12-2016 | DE 102016109776 A1 | 01-12-2016 |
| | | JP 2016224102 A | 28-12-2016 |
| | | US 2016349652 A1 | 01-12-2016 |
| | | US 2018210362 A1 | 26-07-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015107396 A
- JP 2003241439 A
- WO 2007000974 A
- WO 2007000975 A
- WO 2006126566 A
- WO 2007108485 A